(19) Europäisches Patentamt
European Patent Office
Office européen des brevets

(11) **EP 3 533 337 B1**

(12) **EUROPEAN PATENT SPECIFICATION**

(45) Date of publication and mention
of the grant of the patent:
**17.02.2021  Bulletin 2021/07**

(21) Application number: **18190392.3**

(22) Date of filing: **03.09.2010**

(51) Int Cl.:
*A23G 9/20* $^{(2006.01)}$          *A23C 9/152* $^{(2006.01)}$
*A47J 43/12* $^{(2006.01)}$          *A23P 30/40* $^{(2016.01)}$

(54) **METHOD AND SYSTEM FOR DISPENSING A PRODUCT**

VERFAHREN UND SYSTEM ZUR AUSGABE EINES PRODUKTS

PROCÉDÉ ET SYSTÈME POUR DISTRIBUER UN PRODUIT

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA RS**

(30) Priority:  **03.09.2009   NL 2003433**

(43) Date of publication of application:
**04.09.2019   Bulletin 2019/36**

(62) Document number(s) of the earlier application(s) in
accordance with Art. 76 EPC:
**16153669.3 / 3 047 735**
**10757310.7 / 2 473 062**

(73) Proprietor: **FrieslandCampina Nederland B.V.
3818LE Amersfoort (NL)**

(72) Inventors:
• **Wijnen, Maria Elisabeth
  7425 GS Deventer (NL)**
• **van Druten, Wiebe Nicolaas
  3891 AR Zeewolde (NL)**
• **Spronk, Renate Christel
  6703 BD Wageningen (NL)**
• **Botman, Maarten Joannes
  7534 HA Enschede (NL)**
• **Ebbekink, Jan Herman
  7475 SJ Markelo (NL)**
• **van de Heijning, Willibrorda Antonia Maria
  6865 VJ Heveadorp (NL)**
• **Clauwaert, Werner Marie Camiel
  1702 Groot Bijgaarden (BE)**

(74) Representative: **V.O.
P.O. Box 87930
Carnegieplein 5
2508 DH Den Haag (NL)**

(56) References cited:
**EP-A1- 1 061 006          EP-A1- 1 520 483
EP-A1- 2 042 063          WO-A1-2006/078339
WO-A1-2009/110794          WO-A2-2008/009616
DE-A1- 4 126 397          DE-A1- 4 445 436
GB-A- 2 304 523          JP-A- 2005 143 372
SU-A1- 1 493 297          US-A- 4 560 570
US-A- 4 674 888**

**Description**

The invention relates to a system for dispensing a product, for instance, a milk product, milk, foam, cream or aerated dessert, or a different product. The invention is defined by the claims.

Such a system is known from practice in various variants. It is known, for instance, to contain a spray cream in an aerosol, which aerosol is manually operable for spraying the cream, see, for instance, European patent application EP 1 061 006 A1.

Although highly user-friendly, spray cream is usually of lesser quality than whipped cream. Spray cream is, for instance, less stable than whipped cream: the initial firmness of spray cream is usually lower than that of whipped cream and moreover decreases much more rapidly over time than the firmness of whipped cream. One of the causes of this is the absence of a stabilizing network of fat in spray cream. When making whipped cream, during whipping, a network of linked-together fat globules is formed (also called partial coalescence), which contributes to the stability of the foam. The cream that is used for spray cream is usually desensitized to partial coalescence, so as to prevent partial coalescence occurring already before spraying, as a result of shaking of the aerosol and/or temperature fluctuations (which would lead to clogging of the aerosol). Another cause of the lesser stability of spray cream is the use of, for instance, nitrous oxide for foaming the cream. Use of nitrous oxide is often desirable because the high solubility of nitrous oxide in the cream ensures that, with an acceptable pressure in the spray can, sufficient gas can be stored in the can. The gas thereby dissolved in the product is released upon spraying, resulting in highly aerated foam. In addition, the high solubility of nitrous oxide makes for relatively rapid diffusion of the gas from the foamed product, which results in a lesser stability.

A second drawback of the known spray cream is that the quality of the spray cream during spraying is not constant: for instance, the gas content of the initially sprayed cream is considerably higher than that of the finally sprayed cream, because the nitrous oxide pressure falls during spraying.

Automated whipped cream machines are known per se from practice and are provided with static or dynamic mixers for whipping cream. Advantages of whipped cream over spray cream include a different product quality (lesser aerated quality, higher firmness and better preservation of firmness over time). However, in general, the known whipped cream machines require much time for preparing the foamed product (compared to spray can systems), are less user-friendly (at least, difficultly operable), relatively less hygienic and therefore require frequent cleaning.

The present invention concerns in particular a system for dispensing a foamed product.

Dutch patent NL1024433 describes a method for obtaining a monodisperse foam, wherein first relatively coarse prefoam is produced, which prefoam is then passed through a membrane. Dutch patent NL1024438 describes another method, in which different steam beams are spouted into a product, for instance, via a beam divider in the form of a membrane.

DE4126397 describes a foam generator, with a mixing chamber and gas inlet chamber which are separated by a porous partition wall, to prepare a building material foam having a short processing time (< 30 s).

US4674888 concerns a gas injector, to spray chlorine or oxygen into paper pulp.

JP2005143372 concerns reduction of oxygen in whipped cream, utilizing a porous membrane.

WO2008/009616 describes different methods for preparing, for instance, ice cream, *inter alia* agitation of product by means of a rotor and use of membranes.

WO2006/078339 describes a system for obtaining foamed milk, whereby air is supplied to milk via an air hose. Preferably, the hose is provided with a filter to filter impurities from an air stream. Provided behind the filter are valves, to prevent the possibility of hot water flowing to the filter. The mixing of air and milk is done at a distance from the filter, at a hose connector.

An aspect of the present invention contemplates an improved system with which in particular a stable foamed product can be obtained in a particularly efficient manner, with relatively inexpensive, durable and relatively low-energy means, whereby in particular a constant product quality is realized.

To this end the invention provides a product dispensing system for dispensing a foamed product provided with a holder which contains a product to be dispensed, and product discharge means for discharging product coming from the holder, wherein the product discharge means are provided with a microfiltration device which is provided with a product entrance for supply of product, wherein the microfiltration device is connectable to a fluid supply for supplying gas to the product during product discharge, wherein the microfiltration device is provided with a microfiltration wall having gas transmissive pores, for instance, a tubular wall, which separates a gas supply space associated with the fluid supply from a product feed-through channel associated with the product entrance.

In an embodiment of a system according to the invention the microfiltration device is provided with a filtration wall with gas transmissive pores having a pore size in the range of 0.1-10 microns, in particular a pore size of at least 0.1 micron and less than 2 microns, more particularly a pore size of at least 0.2 micron and less than 1.5 microns.

According to an embodiment, a length of the product feed-through channel measured in a product flow direction is at most 5 cm, and more particularly is in the range of approximately 0.5-5 cm, for instance, approximately 2 cm.

In an embodiment a system according to the invention is provided with or connectable to a gas supply to supply gas under superatmospheric pressure to the microfiltration device.

In an embodiment of a system according to the invention the microfiltration device is provided with a housing comprising a product entrance for supply of product, a gas inlet for supply of gas, and an exit for discharge of product provided with gas, wherein said gas inlet terminates in a gas receiving space which is separated by means of a microfiltration wall from said product entrance and exit.

In an embodiment a system according to the invention is provided with an operating device which is designed to cooperate with the holder when the operating device and holder are brought in a position of mutual cooperation.

In an embodiment of a system according to the invention the operating device is provided with operating means for operating said product discharge means, and with fluid supply means for supplying said fluid to the holder.

In an embodiment of a system according to the invention the system is provided with:

- at least one product holder, provided with product to be dispensed, wherein the holder is provided with product discharge means for discharging product from the holder under the influence of fluid supplied to the holder and/or under the influence of a pump; and
- an operating device which is designed to cooperate with the holder when this device and holder are brought in a position of mutual cooperation, wherein the operating device is provided with operating means for operating said product discharge means, and with: a) fluid supply means for supplying said fluid to the holder and/or b) a said pump.

In an embodiment of a system according to the invention the holder is provided with a fluid entrance for supplying the fluid to an inner space surrounded by the holder for bringing this space to a desired pressure, wherein the fluid supply means of the operating device are designed to cooperate with the fluid entrance of the holder for the supply of fluid.

In an embodiment of a system according to the invention the operating device is provided with a sealable cavity in which said holder is detachably placeable, wherein the system preferably comprises a cover for sealing said cavity and wherein said cover is preferably provided with a downstream part of said fluid supply means, in which case the holder is designed to cooperate, with the holder placed in the cavity and a closed cover, with this downstream part of the fluid supply means, for receiving the fluid.

In an embodiment of a system according to the invention the holder is provided with a space surrounded by an outer wall, which is provided with a flexible bag filled with said product.

In an embodiment of a system according to the invention the fluid supply means are designed to supply said fluid to an environment of the holder, in particular to a space enclosed, with the holder and operating device in said position of cooperation, between the holder and operating device.

In an embodiment of a system according to the invention the product discharge means are designed to introduce gas bubbles into the product, in particular for forming a homogeneous foam.

In an embodiment of a system according to the invention the product discharge means are connectable to a gas supply of the operating device, for supplying gas coming from this gas supply to the product.

In an embodiment of a system according to the invention the fluid is gas or a gas mixture, for instance, nitrogen, or air.

In an embodiment of a system according to the invention the product discharge means are provided with a flexible hose.

To this end, the invention provides a method for dispensing a foamed product, characterized in that gas is supplied to a product via a microfiltration device, in particular for introducing gas bubbles into the product for forming a foamed and/or aerated product.

Here, in particular, product is supplied to the microfiltration device, in order to be provided with gas. Thus, the microfiltration device can effect gas bubble formation in the product. According to a further elaboration, the gas and the product are supplied separately from each other to the microfiltration device, for instance, to a mutually separate gas inlet and product inlet, respectively, of that device. The device comprises, for instance, gas transmissive pores; the gas and product are then supplied, in particular, on opposite sides of those pores, such that gas can flow through those pores into the product (the pores mentioned terminate, for instance, in a product feed-through channel defined by the microfiltration device).

It is then preferred (in particular when a good, homogeneous foam is to be obtained) that the product downstream of the microfiltration device:

- undergoes a mixing treatment; and/or
- undergoes a controlled pressure reduction.

An aspect of the invention further comprises a method for dispensing a non-homogeneously foamed product (P), for instance, cappuccino milk. To that end, it appears to be advantageous to supply gas to the product via a microfiltration device, without utilizing a downstream (relative to the microfiltration device) mixing treatment.

The gas mentioned can comprise, for instance, one or more gases, or a gas mixture.

It has appeared that use of a microfiltration device for adding gas to product can provide a highly stable, attractive foam, in particular of constant quality, in a relatively simple manner. With various foamable products, moreover, a particularly high overrun (degree of aeration) has thus been found to be obtained, at any rate, a good overrun that is comparable to or higher than the overrun obtained with methods already known. A minimum overrun can be, for instance, approximately 100%, in particular approximately 150% and more particularly approximately 200% (depending on the product and the use).

According to an alternative advantageous elaboration, the overrun can be less than 100%, and higher than 0%, for instance, at least 1%, for instance, at least 10%. The overrun may be, for instance, in the range of 1-99%, preferably 10-99%, more preferably 10-80%, more preferably 10-60%. In a non-limiting example, milk or a milk product is foamed by the invention, such that it obtains such an overrun.

The invention can provide foamed product very quickly and reliably, in a hygienic manner. This can be utilized on a small or, conversely, on a large scale.

The product formed by the invention can moreover provide a particularly pleasant taste sensation if the product is intended for consumption. Furthermore, it has been found that a relatively compactly designed microfiltration device, and, for instance, a relatively inexpensive microfiltration device manufactured from disposable material (and/or dishwasher proof material), can already effect foam formation with high-quality foam.

The microfiltration device can be designed in various manners. In particular, this device comprises a rigid wall, which separates a product feed-through space (for feeding-through the product) from a gas supply space. The filtration wall is preferably provided with a large number of flow-through channels (extending, for instance, transversely through this wall, from the gas supply space to the product feed-through space), which channels are at least provided with relatively narrow outflow mouths (the channels can each also be narrow channels, but this is not requisite). In particular, the filtration wall is so rigid that the wall does not deform under the influence of any pressure difference that may prevail during use between the product feed-through space and gas supply space, for instance, a pressure difference of more than 1 bar or a smaller pressure difference (the pressures mentioned in this application are absolute pressures).

The product may be, for instance, a food product, milk, cream, cappuccino milk, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream or dessert, in particular a milk product, or comprise a different product. In particular, in the present invention, upstream of the filtration device no prefoam is utilized, at least: a product in itself not yet foamed (i.e., a product in substantially non-foamed condition) is supplied to the microfiltration device.

According to a further elaboration, the product is a homogeneously foamed product (which may or may not be a monodisperse product foam). In addition, the product may be, for instance, non-homogeneously foamed, for instance, if the method leads to formation of a foam layer on the product (e.g., cappuccino milk). As stated, in the latter case (i.e., provision of a non-homogeneously foamed product) no mixing treatment needs to be performed on the product provided with gas.

According to a further elaboration, it is advantageous when, downstream of the microfiltration device, the product undergoes a controlled pressure reduction. Here, the pressure of the product can in particular be gradually brought from a first pressure value to a second pressure value, with the first pressure value being higher than the second pressure value (a pressure difference between the first and second pressure can comprise, for instance, at least 1 bar, or a smaller pressure difference). The first pressure may be, for instance, superatmospheric. The second pressure may be, for instance, substantially atmospheric pressure.

The pressure reduction can be effected, for instance, by a product processing device suitable for that purpose (i.e., a pressure reducer, pressure decreasing device). The processing device can be configured for, for instance, applying shear to the flowing product for the purpose of decreasing the pressure.

As a gradual pressure reduction is applied, with shear being applied to the product in a controlled manner, separation of the product can be well prevented or limited.

It has been found that good results are obtained if downstream of the microfiltration device the product undergoes a mixing treatment, in particular for obtaining a homogeneous product foam. It is then especially advantageous when the mixing treatment is performed by a static mixing device. The mixing device can be, for instance, a product processing device as mentioned, and has been found capable of applying a pressure decrease and shear to the product in a particularly simple manner.

According to a further elaboration, the filtration device is provided with a filtration wall with gas transmissive pores having a pore size in the range of 0.1-10 microns, in particular a pore size of at least 0.1 micron (in particular greater than 0.1 micron) and less than 2 microns (for instance, less than 1 micron, and in particular less than 0.8 micron). Good results are obtained with a pore size in the range of approximately 0.2-0.8 micron, for instance, approximately 0.5 micron. Also, good results are obtained with a pore size in the range of approx. 0.2 to 1.5 microns, for instance, approx. 1.4 microns, for instance, for a non-homogeneously foamed product, for instance, cappuccino milk.

According to a further elaboration, a cumulative pore surface of the pores in a surface of the wall bounding a product feed-through channel may be, for instance, smaller than a remaining, closed part of that surface. In that wall surface the pores may further, for instance, be so distributed over the surface that circumferential edges of neighboring pores are, for instance, at a mutual distance from each other that is greater than a pore dimension mentioned. A ratio between average pore size and average least neighbor distance (between neighboring pores) may be, for instance, in the range of about 1:1-1:50, in particular 1:2-1:20, or another ratio.

Alternatively, a cumulative pore surface of the pores in a surface of the wall bounding the product feed-through channel may be, for instance, greater than a remaining, closed part of that surface. In that wall surface the pores may further, for instance, be so distributed over the surface that circumferential edges of neighboring pores are, for instance, at a mutual distance from each other that is smaller than a pore dimension mentioned. A ratio between average pore size and average least neighbor distance (between neighboring pores) may be, for instance, in the range of about 10:1-1:1, in particular 5:1-1:1, or another ratio.

The product can flow, for instance, along the filtration wall of the microfiltration device, while the gas is supplied from a gas supply space to the pores, to be supplied via the pores to the product. More particularly, a pressure prevailing in the gas supply space can, for instance, be higher than a pressure of the product flowing along the filtration wall.

According to a further elaboration of the invention, the gas can be brought via the filtration device into the product under the influence of an (absolute) pressure of more than 2 bar, for instance, a pressure in the range of more than 5 bar, in particular a pressure higher than 7 bar, for instance, a pressure in the range of about 8 - 15 bar.

According to an advantageous alternative, the pressure mentioned is in the range of 1-2 bar, in particular a pressure higher than 1.01 bar and lower than 2 bar. The pressure is, for instance, higher than an ambient pressure (of the device).

The microfiltration device can be designed in different manners. Good results are obtained if the filtration device is provided with a microfiltration wall which separates a first space from a second space, wherein the product is supplied to the first space and the gas to the second space, or vice versa, such that the gas can be injected via the microfiltration wall into the product. Supply of product to the first space can be carried out by suitable fluid supply means, and supply of gas to the second space can be carried out by suitable gas supply means, which will be clear to the skilled person.

The filtration wall can have different configurations, and, for instance, be a tubular microfiltration wall, which separates a tube inner space from a tube outer space. In another embodiment, the filtration device is provided with, for instance, a flat microfiltration wall (e.g., membrane wall), with the product being passed on one side of the wall along this wall (through a first space as mentioned) and the gas on the other side (to a second space as mentioned), such that the gas is injected into the product via the microfiltration wall (in particular via pores comprised by this wall).

The invention further provides a product dispensing system, for instance, configured for carrying out a method as mentioned. The system is preferably provided with a holder with contains a product to be dispensed, and product discharge means for discharging product coming from the holder, while the product discharge means are provided with a microfiltration device which is provided with a product entrance for supply of product, while the microfiltration device is connectable to a fluid supply for supplying gas to the product during product discharge, in particular for introducing gas bubbles into the product. The microfiltration device may be set up, for instance, at a relatively short distance from the holder.

In this manner, the above-mentioned advantages can be obtained. Preferably, the system is provided with a product processing device, for instance, a mixing device, in particular a static mixer, which product processing device is disposed downstream of the microfiltration device. The product processing device can perform a mixing treatment to mix the product, and/or have the product undergo a controlled pressure reduction, in particular to generate a homogeneous product foam. A treatment to be carried out by the product processing device (mixing treatment, pressure reduction, or both) can thus take place separately from an action to be executed by the microfiltration device (i.e., gas supply). Use of the product processing device mentioned can be omitted if a non-homogeneously foamed product, for instance, cappuccino milk, is to be prepared by the system.

The present system according to the invention is simple in use, relatively quick, relatively reliable and robust (has preferably no moving parts), is easily cleanable and hygienic, while maintaining quality. Additionally, the system can be scaled well; the system can be of relatively small design (e.g., with a microfiltration device of which a largest dimension - e.g., length - is smaller than 50 cm) or, conversely, of relatively large design (e.g., with a microfiltration device of which a largest dimension - e.g., length - is smaller than 1 m).

In a compact system a distance between the product holder and the microfiltration device may be, for instance, less than 1 m, for instance, a distance less than 50 cm, for instance, a distance less than 20 cm, for instance, a distance less than 5 cm.

A microfiltration wall mentioned may be, for instance, cylindrical, for instance, having a circular cross section. According to a further elaboration, a length of the wall (in particular of the product feed-through channel) is at most 50 cm, in particular at most 20 cm, more particularly at most about 10 cm. The length mentioned is, for instance, in the range of approximately 1-20 cm (a minimum length is, for instance, approximately 0.5 cm). In a relatively compact design, this length L is less than 5 cm, for instance, a length of approximately 0.5, 1, 2, 3 or 4 cm.

The method can comprise, for instance, use of a product flow rate and gas flow rate, with a ratio of product flow rate to gas flow rate of 10:1-1:10, in particular 1:1-1:5, for instance, 1:1.5-1:5, in particular 5:1-2:1, or another ratio.

A flow rate of the gas may be, for instance, greater than 10 liters per hour, and may be, for instance, in the range of approximately 30-600 liter/hour (for instance, 50-300 liter/hour and more particularly 100-300 liter/hour), or have a different value. The gas flow rate may be, for instance, at least 7.7 liter/hour and at most 20.3 liter/hour.

Further, the invention provides a microfiltration device, preferably in combination with a product processing device (e.g., a pressure reducing device and/or a static mixing device), for foaming a product. In this manner, the product can be treated by a microfiltration device (with which fine gas bubbles are introduced into the product) and preferably also a static mixing device, which has been found to lead to a particularly stable foam product, and utilizing means that can be designed relatively inexpensively.

A product processing device mentioned (for instance, a static mixing device) can be designed in various manners. According to a further elaboration, this product processing device is designed for agitating product (provided with gas bubbles) flowing through this device and/or changing the direction thereof (i.e., accelerating it, whereby the direction of the product velocity vector preferably changes a great many times). The product processing device is, in particular, not provided with moving parts, and can mix the product passively.

A product processing device mentioned (for instance, static mixing device) can, for instance, be designed for holding substantially static obstructions (for instance, substantially round obstructions, balls, marbles, flow velocity influencing walls or the like) in a flow path of the product, for treating the product (and in particular having it travel one or more non-straight paths through the product processing device).

The product provided with gas bubbles can, for instance, be thrust through/along the product processing device under the influence of a fluid pressure suitable therefor (in particular, a superatmospheric pressure). This fluid pressure is preferably also utilized for supplying the product to (and, in particular, through) the microfiltration device.

A static mixing device mentioned can be designed in different manners, and, for instance, comprise a helical, cube-shaped or rhomboid mixer (provided with helical, cube-shaped or rhomboid product mixing walls), and/or be provided with through-flow space containing obstructions. The mixing device can, for instance, comprise a dispersive or distributive mixing device. It will be clear that the mixing device can also be designed differently.

An aspect of the present invention, which aspect can, for instance, be combined with one or more embodiments of the above-described aspect, further contemplates a completely novel and improved system for dispensing a product, the product comprising, for instance, a milk product, foam, milk, cream, cappuccino milk, spray cream, an alcohol-containing drink or drink base, for instance, beer or wine, (fruit) juice/drink, a dairy or dairy-based drink, for instance, a whey drink or permeate-based drink, (milk) shake, chocolate drink, (drinking) yoghurt, sauce, ice cream or aerated dessert, or other product. In particular, an especially user-friendly system and method are envisaged, with which the product can be dosed relatively accurately, and in a constant and hygienic manner.

According to the invention, this is achieved by a system which is provided with:

- at least one product holder, provided with product to be dispensed, optionally with propellant, the holder being provided with product discharge means for discharging product from the holder under the influence of fluid supplied to the holder and/or under the influence of a pump; and
- an operating device designed to cooperate with the holder when this device and holder are brought in a mutually cooperating position, the operating device being provided with operating means for operating the product discharge means, and with: a) fluid supply means for supplying the fluid mentioned to the holder, and/or b) a pump mentioned.

This system is a particularly user-friendly system, and can dispense product in a reliable, hygienic manner. Furthermore, the system can be made of compact and robust design.

During use, a holder, filled with product, can be simply brought in the position cooperating with the operating device. Thereupon, the operating device can be used for dispensing the product, in desired dosages. Here, a suitable fluid can be supplied to the fluid entrance mentioned. The fluid preferably comprises ambient air, but use of other fluids, for instance, one or more gases, steam, or even a liquid, is not excluded.

The fluid supplied by the operating device to the holder can hold the holder (for instance, an inner space thereof) at a desired pressure (in particular a superatmospheric, product expelling pressure), under the influence of which pressure the product can be dispensed, via the discharge means. Here, in particular, the discharge means can serve as a valve means operable by the operating means, or operable sealing, for instance, when the discharge means comprise a flexible hose, in order that product to be discharged comes into contact with relatively few parts of the system.

When the holder is emptied, at least when operation of the product discharge means no longer leads to dispensing of product, the holder can be replaced with a successive holder filled with product. The used holder may be reused (be refilled with product) or be discarded, recycled, or be otherwise disposed of.

According to a further elaboration, the holder is provided with a fluid entrance for supplying the fluid to an inner space surrounded by the holder for bringing this space to a desired product expelling pressure, the fluid supply means of the operating device being designed to cooperate with the fluid entrance of the holder for supply of fluid.

Further, the fluid supply means of the operating device can be designed, for instance, to supply fluid to an environment of the holder, for instance, to a space enclosed between the holder and operating device, with the holder and the operating device in a position of cooperation.

According to a preferred embodiment, the product discharge means (of the holder) are designed to subject the product to a foam forming treatment during product discharge, in particular to provide a desired product foam. Such foam forming treatment can comprise, for instance, introduction of gas and/or agitation of the product (in particular, introducing gas optionally followed by agitation of the product), which depends, for instance, on the composition of the product to be dispensed.

The product discharge means mentioned may be designed, for instance, to introduce gas bubbles into the product, whether to form a homogeneous foam or not so. This is advantageous, for instance, if the product in itself (when still in the holder) contains no gas or hardly any gas. According to a compact and efficient configuration, the product discharge means of the holder are connectable to a gas supply of the operating device, for supplying gas coming from this gas supply (also) to the product. More particularly, a product expelling fluid to be supplied to the holder can be a gas or gas mixture, of which at least a part is fed into the product under the influence of the discharge means (in particular, downstream of a product storage space of the holder) to form gas bubbles.

It has appeared that particularly good results are obtained if the system (and in particular the product discharge means of the holder) is provided with both a microfiltration device and, disposed downstream thereof, a static mixing device, to foam the product (for instance, homogeneously). In addition, the system may be provided, for instance, with only a microfiltration device mentioned, or only a (static) mixing device mentioned.

Preferably, the filtration device and/or the product processing device (e.g., mixing device) is/are integrated with the product discharge means of the holder. Further, it is advantageous if the product holder and product discharge means thereof are manufactured from disposable material.

According to an advantageous embodiment, the product discharge means are provided with a flexible hose, manufactured from, for instance, an elastic or resilient material, and/or manufactured from, for instance, flexible plastic, or other suitable flexible (or even resilient) material. Such a hose can easily be brought in a position cooperating with the operating device, and can discharge product from the holder in a hygienic manner. The operating means of the operating device are then preferably designed to cooperate with the hose, in particular for squeezing tight a part of the hose in a first position and releasing it in a second position for stopping and allowing passage of the product, for the purpose of regulating product dispensing.

The product to be dispensed present in the holder can contain various products. The product can be homogeneously foamable, i.e., after foaming (when the product is a foamed product) foam bubbles are relatively homogeneously (i.e., uniformly) distributed in the product. Alternatively, no homogeneously foamed product is generated, whereby, for instance, a foam layer is formed on the product after dispensing of product (e.g., cappuccino milk).

The product comprises, in particular, a food, for instance, a product safe for human consumption. The product comprises, for instance, one or more of: milk, cream, spray cream, cappuccino milk, or a dessert (for instance, a mousse forming product) or juice. The product can comprise a milk product, for instance, cream. According to an alternative embodiment, the foamable product comprises, for instance, a conditioner and/or cosmetic, and/or a cleaner, and/or, for instance, a body care product, a hair treating agent, or the like.

As mentioned, the product still present in the holder may contain, for instance, no gas or little gas.

According to an alternative elaboration, the product as such present in the holder contains a gas or gas mixture, for instance, a blowing agent, which blowing agent can effect foam formation in the product during dispensing of product. If the product is a food product, the product present in the holder preferably contains no oxygen. Suitable blowing agents are, for instance, nitrous oxide ($N_2O$), nitrogen ($N_2$), air, and/or carbon dioxide ($CO_2$), depending on the product to be dispensed. The operating device of the system may be designed, for instance, to utilize such a blowing agent as expelling agent, and supply it to the holder for effecting dispensing of product. However, a fluid to be supplied to the holder by the operating device is preferably not a blowing agent already present in the product, but, for instance, air or nitrogen.

According to a further elaboration of the invention, the operating device is designed to cool a holder (and preferably also at least a part of the product discharge means) in the position of cooperation, preferably such that the temperature of the product in the holder is lower than 10 °C (and in particular lower than 5 °C). The temperature of the product discharged during use can be higher than 0 °C, equal to 0 °C, or, conversely, lower than 0 °C. This is advantageous, for instance, if the product can decay at relatively high temperatures. Furthermore, the cooled product can form a relatively durable homogeneous foam.

In a further, advantageous elaboration, the discharge means are an integral part of the holder, to prevent contamination of the contents of the holder. The discharge means may, for instance, be undetachably connected to the holder and may be discarded, recycled or be otherwise disposed of after use, with or without the holder. Alternatively, the discharge means are a separate part, and can, for instance, be separated from a used holder to be fitted to a next holder. In the latter case, the discharge means may be, for instance, of dishwasher proof material.

Of additional advantage is the further elaboration where the operating device is provided with a sealable cavity in which the holder can be detachably placed. Preferably, a cover is provided for sealing off the cavity. The cover may then be provided, for instance, with a downstream part of the fluid supply means, in which case the holder is designed to cooperate with this downstream part of the fluid supply means, with the holder placed in the cavity and the cover closed, for receiving the fluid.

Further, according to an aspect, it is advantageous when in the pressure chamber of the holder a flexible bag is provided, which bag contains the product to be dispensed. In that case, further, suitable propellant may be provided in the bag, which can lead to good results and a stably dispensed product.

A further aspect of the invention provides a holder of a system according to the invention. The holder can serve for storage and transport of the homogeneously foamable product before the product is to be dispensed for use. For the purpose of product dispensing, the holder can be brought into a condition of cooperation with an operating device to receive fluid therefrom, for the purpose of dispensing product.

The invention furthermore offers an operating device of the system according to the invention, wherein the operating device can be brought into a condition of cooperation with a holder to supply fluid thereto, for the purpose of dispensing product.

The holders and holder operating devices mentioned can therefore be supplied separately from each other. The holders are, for instance, of relatively inexpensive, compact and lightweight design and disposable or reusable (refillable) after use, while the operating device is usable multiple times to dispense product from the holders.

An aspect of the invention further offers the advantage wherein a holder and operating device are brought in a position of mutual cooperation, wherein the operating device supplies fluid to the holder (for instance, for bringing the holder to a particular pressure), wherein the operating means can be brought from a first operating condition, in which product discharge via the product discharge means is prevented, to a second operating condition to discharge product via those discharge means.

According to a preferred embodiment, air is supplied to the holder for the purpose of expelling product from the holder. A further elaboration furthermore comprises introducing (for instance, via a microfiltration device) air into the product, when the product is discharged by the product discharge means, for generating air bubbles in the product. In that case, use of a static mixer for mixing the product provided with air bubbles can be particularly advantageous for providing a homogeneous (monodisperse or otherwise) product foam. It is noted that the present invention is not limited to generating homogeneous or monodisperse foam.

Further elaborations of the invention are described in the subclaims. Presently, the invention will be clarified on the basis of an exemplary embodiment and the drawing. In the drawing:

Fig. 1 shows a schematic view of a system according to a first exemplary embodiment of the invention;
Fig. 2 schematically shows an example of a microfiltration device;
Fig. 3 schematically shows an example of a static mixer;
Fig. 4 shows a schematic, cutaway, side view of an assembled system according to a second exemplary embodiment of the invention;
Fig. 5 shows a view similar to Fig. 4 of the operating device, in an opened position;
Fig. 6 shows a view similar to Fig. 4 of the product holder;
Fig. 7 shows a schematic, cutaway, side view of an alternative embodiment of the product holder;
Fig. 8 show a further elaboration; and
Fig. 9 shows an alternative further embodiment.

In this application, identical or corresponding features are indicated with identical or corresponding reference numerals.

First exemplary embodiment

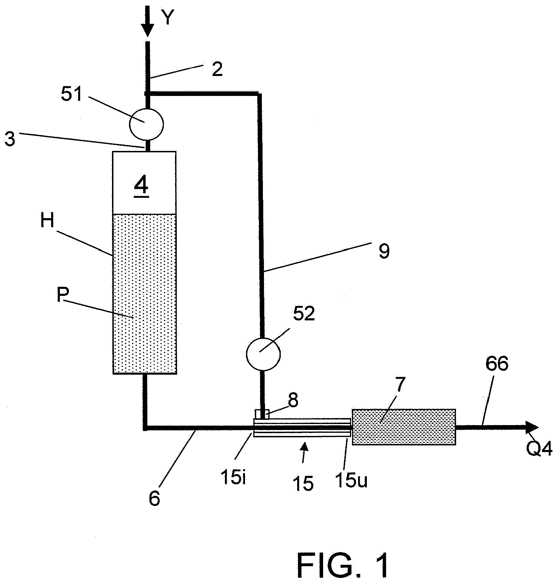

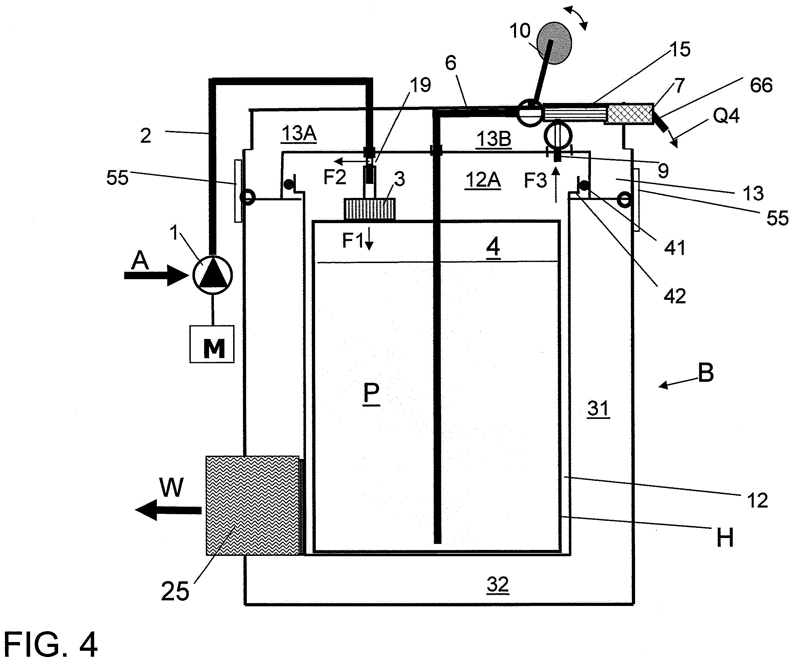

Fig. 1 schematically shows an example of a product dispensing system, comprising a holder H which contains a product P to be dispensed, and product discharge means 6 (for instance, provided with a product discharge channel) for discharging product P coming from the holder H. The system shown in Fig. 1 may be utilized, for instance, in an assembly as represented in Figs. 4-6, or otherwise.

The holder H can be designed and formed in different manners. For instance, an outer wall of the holder H can be manufactured from, for instance, metal, an alloy, plastic, or the like. The outer wall can be of rigid or flexible design. The holder H may be, for instance, of cylindrical or angular design, or of different design. The holder H can be designed, for instance, to withstand a maximum internal pressure of 12 bar, in particular 10 bar, for instance, if the holder H is provided with a propellant (see hereinbelow). According to an advantageous embodiment, the holder H is designed to withstand a considerably lower maximum pressure, for instance, at most 2 bar, so that the holder can be of relatively light (and, for instance, relatively simple, inexpensive) design.

According to an advantageous elaboration, the product P present in the holder is a homogeneously foamable product, and in particular a food product, milk, cream, cappuccino milk, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream or dessert, juice, more particularly a milk product. The product P can be, for instance, cream. The product P can optionally contain, for instance, a propellant or blowing agent (for instance, in a condition at least partly dissolved in the product), in particular a propellant consisting of one or more of: air, $N_2$, $N_2O$ and/or $CO_2$. Such a propellant or blowing agent is, in particular, safe with regard to food technology. The propellant or blowing agent can hold the inner space 4, for instance, at a particular superatmospheric prepressure.

Furthermore, the product P may comprise, for instance, no homogeneously foamable and/or consumable product P.

As shown in Fig. 1, the product discharge means 6 are advantageously provided with a microfiltration device 15, which is, for instance, connectable (via a gas inlet 8) to a fluid supply 9 for supplying gas to the product during product discharge. The microfiltration device 15 is furthermore provided with a product entrance 15i for receiving (not yet foamed) product P (for instance, a product P not yet containing gas) coming from the holder H and discharge 6.

The system shown in Fig. 1 can further be provided with, for instance, regulating means 51, 52, for instance, one or more operating valves, operating buttons and/or the like, for regulating gas supply and/or gas pressure, which will be clear to the skilled person. Operable valve means may be provided, for instance, for regulating gas supply (or gas pressure) to the holder H. Operable valve means may be provided, for instance, for regulating gas supply (or gas pressure) to the microfiltration device 15.

Preferably, the product discharge means 6 are further provided with an optional product processing device, in this example comprising a mixing device 7 disposed downstream of the microfiltration device 15 for performing a mixing treatment on the product provided with gas. More particularly, the mixing device is a static mixer 7. The product processing device can also be designed otherwise. Preferably, this device is designed to enable controlled (in particular, gradual) reduction of the excess pressure of the product from, for instance, a superatmospheric pressure to a lower, substantially atmospheric pressure.

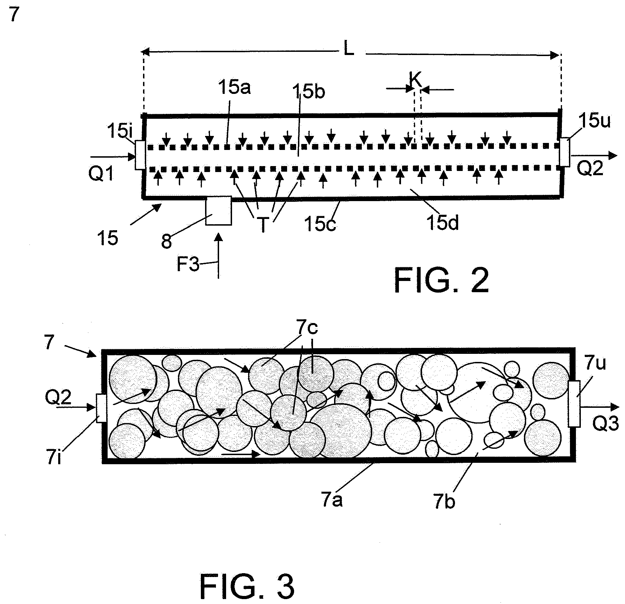

Figs. 2 and 3 show further, non-limiting elaborations of the filtration device 15 and mixing device 7, respectively, in more detail.

The microfiltration device 15 is provided, for instance, with a (substantially closed) housing 15c comprising a product entrance 15i for supply of product P, a gas inlet 8 for supply of gas, and an exit 15u for discharge of product provided with gas. The gas inlet 8 terminates, for instance, in a gas receiving space 15d (i.e., a second space 15d) which is separated from the product entrance 15i and exit 15u by means of a rigid (in particular, not flexible) microfiltration wall 15a (provided with gas transmissive pores). Furthermore, the wall 15a separates the gas supply space 15d from a product feed-through channel 15b (i.e., a first space 15b). The feed-through channel 15b extends between the product entrance 15i and product exit 15u (in the housing 15c) of the filtration device 15. Supply and discharge of product to/from the channel 15b is indicated with arrows Q1, Q2, respectively.

As mentioned, the microfiltration device 15 can be designed in various manners. In particular, the filtration wall is so rigid that the wall does not deform under the influence of a pressure difference prevailing, during use, between the product feed-through space 15b and gas supply space 15d, for instance, a pressure difference of more than 1 bar.

In the exemplary embodiment, the product feed-through channel 15b is in the microfiltration wall 15a (at least, is surrounded by that wall) and the gas supply space 15d is outside thereof. Alternatively, the product feed-through channel 15 is outside the microfiltration wall 15a, while the gas supply space 15d is formed by the space surrounded by this wall 15a.

The microfiltration wall 15a is, for instance, cylindrical, tubular, with, for instance, a circular cross section. According to a further elaboration, a length L of the wall 15a (in particular, of the channel 15b) is at most 50 cm, in particular at most 20 cm, more particularly at most approximately 10 cm. This length L is, for instance, in the range of approximately 1-20 cm (a minimum length is, for instance, approximately 0.5 cm). In a relatively compact design, this length L is less than 5 cm, for instance, a length of approximately 0.5, 1, 2, 3, or 4 cm. The length L is, in particular, the length of the wall 15a measured in a product flow direction of product during use flowing along this wall (parallel to this wall 15a), from the product entrance 15i to the product exit 15u. The filtration device 15 (for instance, microfiltration wall 15a) can also be dimensioned and shaped differently, for instance, flat, curved, conical, angular, straight, convex viewed from the first space, concave viewed from the first space, and/or a combination of these or other shapes. A morphology of the wall 15a may be, for instance, homogeneous, sintered, cylindrically porous or spongy porous, built up symmetrically or asymmetrically, built up from several different layers, may comprise a combination of these configurations or be designed in a different manner.

The microfiltration wall 15a may in itself be manufactured from different materials, for instance, ceramic material, metal, plastic, polypropylene, polyolefin, a blend, an alloy or the like.

The microfiltration wall 15a is preferably provided with relatively narrow air transmissive pores (for instance, air transmissive outflow channels, injection channels, with gas outflow ends that terminate in the feed-through channel 15b), in particular having a pore dimension K (in particular, pore size, measured at right angles to a pore flow-through direction; for instance, a pore diameter, see Fig. 2) in the range of 0.1-10 microns, in particular in the range of approximately 0.1-2 microns (for instance, 0.1-1 micron). Good results are obtained if the pore size (or channel cross dimension) is in the range of approximately 0.1-0.5 micron, in particular 0.2-0.8 micron, and is, for instance, approximately 0.5 micron. Also, good results are obtained with a pore size in the range of approx. 0.2-1.5 microns, for instance, approx. 1.4 microns, for instance, for a non-homogeneously foamed product, for instance, cappuccino milk.

This pore size/channel cross dimension K is in particular at least the size of a downstream part of the respective pore (outflow channel), for instance, an outflow end thereof (which end bounds the product feed-through channel 15b); a part of the pore upstream relative to the pore outflow end can, for instance, have the same pore size (for instance, diameter) as the outflow end, or a greater one.

The pores (outflow channels) in the wall 15a can, for instance, all have substantially the same pore size, or different sizes that are in a predetermined pore size range, which will be clear to the skilled person. A pore size value can be, for instance, a pore size range comprising the value mentioned minus 50% (in particular 10%) up to the value plus 50% (in particular 10%).

A wall thickness of the microfiltration wall 15a can be, for instance, smaller than 1 cm, and is, for instance, in the range of 0.1-5 mm, in particular, for instance, 0.5-2 mm. According to a non-limiting example, if the device 15 is tubular, a tube outer diameter of this filtration device 15 can be, for instance, smaller than 10 cm, for instance, smaller than 1 cm.

A cumulative pore surface of the pores in a surface of the wall 15a bounding the product feed-through channel 15b is, for instance, smaller than a remaining, closed part of this surface. In this wall surface the pores may further, for instance, be so distributed over the surface that circumferential edges of neighboring pores are, for instance, at a mutual distance from each other that is greater than a pore dimension K mentioned. A ratio between average pore size and average least neighbor distance (between neighboring pores) may be, for instance, in the range of approximately 1:1-1:50, in particular 1:2-1:20, or other ratio.

A cumulative pore surface of the pores in a surface of the wall 15a bounding the product feed-through channel 15b is, for instance, greater than a remaining, closed part of this surface. In this wall surface the pores may further, for instance, be so distributed over the surface that circumferential edges of neighboring pores are, for instance, at a mutual distance from each other that is smaller than a pore dimension K mentioned. A ratio between average pore size and average least neighbor distance (between neighboring pores) may be, for instance, in the range of approximately 10:1-1:1, in particular 5:1-1:1, or other ratio.

Preferably, the pores are relatively uniformly distributed over the wall 15a, in a regular arrangement or not so.

Preferably, the microfiltration wall 15a is, preferably concentrically, arranged in a hollow housing 15c of the filtration device 15 (see Fig. 2), which housing is provided with the gas inlet 8. Between an inside of the housing 15c and an outside of the (in this case) tubular microfiltration wall 15a is the interspace 15d for collecting air supplied via inlet 8.

During use, the air present in the interspace 15d preferably has a pressure higher than 2 bar, in particular higher than 5 bar, more particularly a pressure higher than 7 or 8 bar, for instance, a pressure in the range of 8-15 bar. The pressure of product present during use in the flow-through space 15b is, in particular, lower than the pressure in the interspace 15d (for instance, at least 1 bar lower, or a lower pressure difference, for instance, a pressure difference greater than 0 bar and less than 1 bar), such that air present in the interspace 15d enters the product uniformly via the pores (which is indicated with arrows T). In this manner, fine air bubbles can be homogeneously introduced into the product P, for the purpose of foam formation.

The static mixer 7 can be designed in different manners. The static mixer is, in particular, not provided with moving parts, this in contrast to, for instance, a disperser provided with moving parts, such as a turrax or rotor-stator mixer. Fig. 3 shows a non-limiting example, where the mixer 7 is provided with a flow-through space 7b surrounded by a holder 7a, which space 7b is filled with substantially static obstructions 7c (for instance, substantially round obstructions, for instance, provided with smooth surfaces, for instance, granules or glass marbles 7c). Supply and discharge of product to/from the space 7b is indicated with arrows Q2, Q3. The obstructions cause the product to traverse a large number of non-straight paths through the space 7b, between an entrance 7i and exit 7u of the mixer 7. Another advantageous static mixer is provided, for instance, with flow velocity influencing walls or the like, for instance, with helical walls or the like.

In particular, the system is provided with or is connectable to a gas supply for supplying gas under superatmospheric pressure to the microfiltration device 15, and preferably also to the holder H. Gas supply to the system is indicated in Fig. 1 with an arrow Y. Pumping means (for instance, with a compressor) and/or a gas reservoir brought to excess pressure (for instance, a gas cylinder) may be provided, for instance, to effect gas supply. The system can comprise, for instance, regulating means 51, 52 for regulating flow rates and/or pressure of gas to be supplied to the holder H and filtration device 15. The supply comprises, for instance, a supply line system 2, provided with a line part that, during use, is connected to a suitable gas inlet 3 of the holder H, and a line part that, during use, is connected to a filtration device 15, for supplying gas thereto. The gas may comprise, for instance, one or more gases, a gas mixture, nitrogen, air or the like.

Optionally, the holder H is provided with a pressure release valve (not represented) for rendering a pressurized holder H pressureless.

The present exemplary embodiment is designed to supply the same gas to the holder H and filtration device 15. Alternatively, gas supply means can be designed, for instance, to supply a first gas to the holder and a second gas, different from the first gas, to the filtration device 15. In addition, the system may for instance be designed in a different manner to effect product flow, for instance, by providing the system with pumping means to pump product P from the holder H through the discharge.

Use of the system shown in Figs. 1-3 comprises, for instance, a method for dispensing the product P coming from the holder H (for instance, a substantially gasless product), with gas being supplied to the product P (flowing through the feed-through channel 15b) via the microfiltration device 15. In particular, microfiltration device 15 is operative to inject the gas into the product P supplied to that device.

Preferably, the product P which is supplied to the filtration device is not heated. The product may, for instance, be cooled (for example, to a temperature that is lower than a holder ambient temperature), or have an ambient temperature. In another example, the product P which is supplied to the filtration device is heated (for instance, to a temperature that is higher than the temperature at which the product has been stored, for instance, a cold store temperature or a temperature that is higher than a holder ambient temperature).

The temperature of the gas (or gas mixture) to be supplied to the filtration device can be, for instance, an ambient temperature, for instance, room temperature. The gas temperature can be, for instance, in the range of 0-50 °C, or another temperature, for instance, a temperature higher than 50 °C or, conversely, a temperature of 0 °C, or lower than 0 °C.

Here, the product P, in itself preferably not yet foamed, is passed out of the holder H, for instance, under the influence of gas supplied via the supply 2, to be conducted via the discharge 6 through the filtration device 15 and then through the mixer 7. Here, the product is passed, in particular, through the tube inner space (i.e., feed-through channel) 15b of the microfiltration device 15 (with the product flowing along the filtration wall 15a), while gas from the gas supply space 15d is injected via the microfiltration wall 15a (at least, through the wall) into the product for the purpose of bubble formation in the product (to that end, the gas is supplied from the gas supply space 15d to the pores). A pressure prevailing in the gas supply space 15d is, for instance, higher than a pressure of the product P flowing along the filtration wall 15a. A flow rate of the product flowing through the filter 15 can be, for instance, higher than 10 liter/hour, and be in the range of, for instance, approximately 20-200 liter/hour (for instance, 20-50 liter/hour), or other range.

Good results are obtained if the gas is introduced via the filtration device 15 into the product P under the influence of a pressure of more than 2 bar, for instance, a pressure in the range of higher than 5 bar, in particular a pressure higher than 7 or 8 bar, for instance, a pressure in the range of approximately 8 - 15 bar. A flow rate of the gas may be, for instance, greater than 10 liters per hour, and may be, for instance, in the range of approximately 30-600 liter/hour (for instance, 50-300 liter/hour and more particularly 100-300 liter/hour), or have a different value. The ratio of product flow rate to gas flow rate can be, for instance, in the range of 10:1-1:10, in particular 1:1-1:5, for instance, 1:1.5-1:5, in particular 5:1-2:1, or other ratio.

Thereupon (i.e., downstream of the microfiltration device 15) the product P undergoes a mixing treatment, which is performed by the static mixing device 7. It has been found that the product coming from the mixer 7 (product outflow via an optional outflow line 66 is indicated in Fig. 1 with arrow Q4) can contain a particularly durable, stable foam, which may, for instance, be foamed particularly homogeneously if the product in itself is a foamable product. Moreover, the system can be made of particularly compact, durable and relatively simple design to obtain such a result.

Example 1a

The volume increase of the product after foaming is often denoted with the term 'overrun percentage' or 'overrun'. The overrun percentage gives the volume increase of the product P after foaming with respect to the volume of the non-foamed product and can be represented as:

$$\text{Overrun} = \frac{W_p - W_s}{W_s} \times 100\%$$

wherein $W_p$ represents the mass of a fixed volume of unfoamed product and $W_s$ the mass of the same volume of foamed product (inclusive of any product drained therefrom). Thus, an overrun percentage of 100% means that a volume of 100 ml after dispensing has increased to 200 ml.

The product firmness can be expressed in Stevens (in g; "Stevens hardness"), which hardness or firmness is determined as the maximum resistance to deformation during penetration of a cylindrical cone having a diameter of 2.54 cm into a sample at a speed of 1 mm/s to a depth of 20 mm.

In a first experiment, semi-skimmed milk ("Friesche Vlag Lang lekker") was foamed with a microfilter set-up as schematically represented in Fig. 1, however, without the mixing device 7. Different product flow rates and gas flow rates were used.

As microfiltration device 15, a ceramic tubular membrane was used with a pore size of 1400 nm (symmetrical, with an outer diameter to inner diameter ratio of 4 mm:3 mm, a tube length of 20 cm, a pore size of 1400 nm, from Hyflux CEPAration). For the purpose of the experiment, the following parameters were measured: product flow rate, gas flow rate, pressures P1 (pressure in the holder), P2 (pressure in the product feed-through channel before the microfiltration device), P3 (pressure on the gas side of the microfiltration device (interspace)), and P4 (pressure in the product feed-through channel after the microfiltration device) and the resulting product overrun. Table 1a shows the result of this experiment.

Table 1a; result of the first experiment.

| P1 [bar] | P2 [bar] | P3 [bar] | P4 [bar] | Product flow rate [liter/hour] | Gas flow rate [liter/hour] | Overrun [%] |
|---|---|---|---|---|---|---|
| 2 | 1.65 | 2.8 | 1.0 | 90 | 40 | 40 |
| 2 | 1.75 | 3.2 | 1.0 | 70 | 70 | 80 |
| 2 | 1.8 | 3.4 | 1.1 | 60 | 95 | 125 |

The foams produced in the first experiment have a fine bubble structure and are homogeneously foamed. After mixture of the foamed product with, for instance, hot coffee, a fine foam layer is formed on top of the mixture, which remains present as fine foam for at least 15-30 minutes.

Example 1b

The volume increase of the product after foaming is often denoted with the term 'overrun percentage' or 'overrun' (definition, see Example 1a).

In a second experiment, semi-skimmed milk ("Friesche Vlag Lang lekker") was foamed at a product temperature of 60 °C with a microfilter set-up as schematically represented in Fig. 1, however, without the mixing device 7. Different gas flow rates were used.

As microfiltration device 15, a polypropylene tubular membrane was used with a pore size of 200 nm (symmetrical, with an outer diameter to inner diameter ratio of 8.6 mm:5.5 mm, a tube length of approx. 20 cm, a pore size of 200 nm, from Membrana Accurel). For the purpose of the experiment, the following parameters were measured: product flow rate, gas flow rate, pressures P1 (pressure in the holder), P2 (pressure in the product feed-through channel before the microfiltration device), P3 (pressure on the gas side of the microfiltration device (interspace)), and P4 (pressure in the product feed-through channel after the microfiltration device) and the resulting product overrun. Table 1b shows the result of this experiment.

Table 1b; result of the second experiment.

| P1 [bar] | P2 [bar] | P3 [bar] | P4 [bar] | Product flow rate [liter/hour] | Gas flow rate [liter/hour] | Overrun [%] |
|---|---|---|---|---|---|---|
| 3.0 | 1.0 | 1.2 | 1.0 | 24 | 7.7 | 20 |
| 2.9 | 1.0 | 1.2 | 1.0 | 24 | 11.2 | 30 |
| 2.9 | 1.0 | 1.2 | 1.0 | 24 | 15.1 | 50 |
| 3.0 | 1.0 | 1.3 | 1.0 | 24 | 20.3 | 80 |
| 3.0 | 1.0 | 1.3 | 1.0 | 24 | 30.2 | 140 |

The foams in the second experiment produced at a lower pressure than in Example 1a also have a fine bubble structure and are homogeneously foamed. After mixture of the foamed product with, for instance, hot coffee, a fine foam layer remains on top of the mixture for at least 15-30 minutes.

Example 2

A milk cream (35% fat, 10% sugar, pasteurized, non-homogenized) was foamed (at a temperature lower than 10 °C) with the set-up as schematically represented in Fig. 1, including the mixing device. The mixing device 7 comprised a helical mixer with a diameter of 6.4 mm and a length of 32 elements (140-632; TAH industries).

Different product flow rates and gas flow rates were used.

Three different microfiltration devices 15 were utilized, viz.:

I) a ceramic tubular membrane with a pore size of 800 nm (symmetrical, outer diameter to inner diameter ratio of 4 mm:3 mm, length 20 cm);

II) a ceramic tubular membrane with a pore size of 500 nm (asymmetrical, outer diameter/inner diameter 4 mm/3mm, length 20 cm); and

III) a ceramic tubular membrane with a pore size of 200 nm (symmetrical, outer diameter/inner diameter 3 mm/2mm, length 20 cm (each from Hyflux CEPAration).

Measured parameters were the product flow rate, the gas flow rate, the pressures P1 (pressure in the holder), P2 (pressure in the product feed-through channel 6 before the microfiltration device), P3 (pressure on the gas side of the microfiltration device (interspace 15d)) and P4 (pressure in the product feed-through channel after the microfiltration device 15), the resulting product overrun and firmness. Tables 2-4 show the results with regard to the three filters, from which it appears that diverse foaming properties can be achieved.

Table 2: Results experiment 2 with filter pore size: 800 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 45 | 6.2 | 3.9 | 5.2 | 3.0 | 138 | 99 |
| 20 | 60 | 6.4 | 4.4 | 5.7 | 3.4 | 125 | 144 |
| 20 | 70 | 6.8 | 4.6 | 5.9 | 3.6 | 121 | 156 |
| 40 | 125 | 7.7 | 5.9 | 7.2 | 4.5 | 115 | 148 |
| 40 | 155 | 8.1 | 6.3 | 7.6 | 4.8 | 108 | 179 |

Table 3: Results experiment 2 with filter pore size: 500 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 55 | 5.3 | 3.8 | 6.0 | 2.8 | 130 | 110 |
| 20 | 70 | 6.7 | 4.2 | 6.6 | 3.2 | 121 | 140 |
| 20 | 130 | 7.1 | 4.7 | 7.3 | 3.6 | 96 | 185 |
| 40 | 90 | 7.0 | 5.1 | 7.4 | 3.6 | 112 | 109 |
| 40 | 110 | 7.4 | 5.5 | 7.8 | 4.0 | 114 | 132 |
| 40 | 185 | 8.1 | 6.2 | 8.8 | 4.7 | 102 | 172 |

Table 4: Results experiment 2 with filter pore size: 200 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 35 | 8.7 | 6.2 | 10.4 | 3.2 | 130 | 111 |
| 20 | 45 | 8.9 | 6.6 | 10.8 | 3.4 | 140 | 129 |
| 20 | 55 | 9.2 | 7.0 | 11.6 | 3.9 | 132 | 175 |
| 40 | 75 | 10.5 | 8.7 | 12.6 | 4.2 | 123 | 150 |

(continued)

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 40 | 95 | 10.8 | 9.1 | 13.4 | 4.5 | 122 | 187 |

Second exemplary embodiment

Fig. 4 shows an example of a system for dispensing a homogeneously foamed product. In this case, the system is provided with an optional filter/mixer configuration, schematically shown in Figs. 1-3.

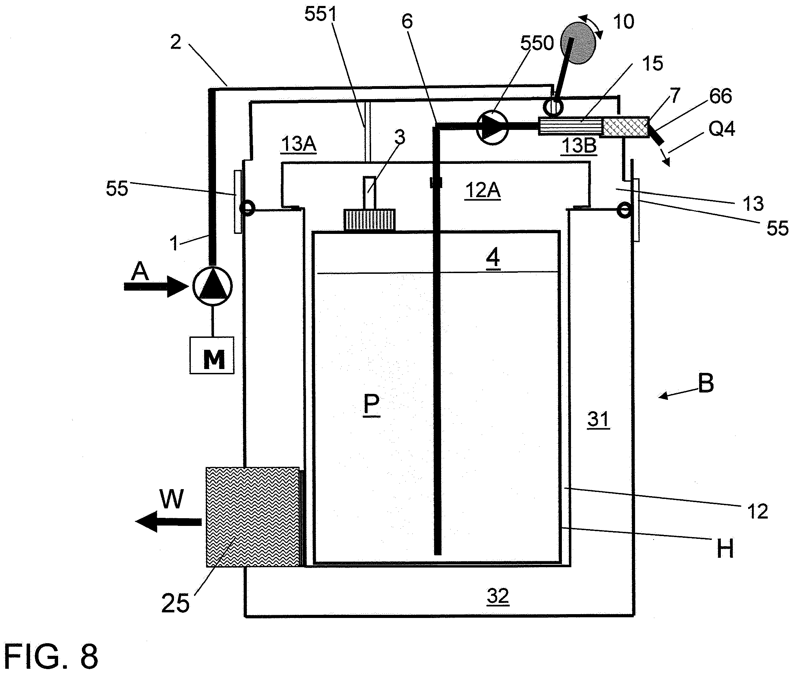

The system shown in Fig. 4 is provided with at least one product holder H, which is provided with product P, the holder H being provided with product discharge means 6 for discharging product from the holder H under the influence of fluid supplied to the holder H (which is also used for foaming the product). Fig. 8 shows an alternative system, provided with a pump 550 for discharging product from the holder H.

The holder H can be designed and formed in different manners. An inner space 4 surrounded by the holder H may already be at a superatmospheric pressure (for instance, at least 2 bar) before the holder H is placed in the operating device B. According to an advantageous embodiment, neither the product nor the holder H as such is provided with propellant, and the inner space 4 of the holder H is at substantially atmospheric pressure, or a pressure lower than 2 bar, before the holder H is brought in the position of cooperation with the operating device B.

In the present second exemplary embodiment, the product discharge means 6 are preferably provided with a flexible hose 6, which is preferably integrally (i.e., undetachably) connected to the holder H. Alternatively, the hose 6 of the holder H is uncouplable, for instance, for the purpose of cleaning.

An upstream part of the present hose 6 reaches towards a bottom of the holder H and is located near the bottom, or lies on the bottom, to discharge product P when the holder is almost empty.

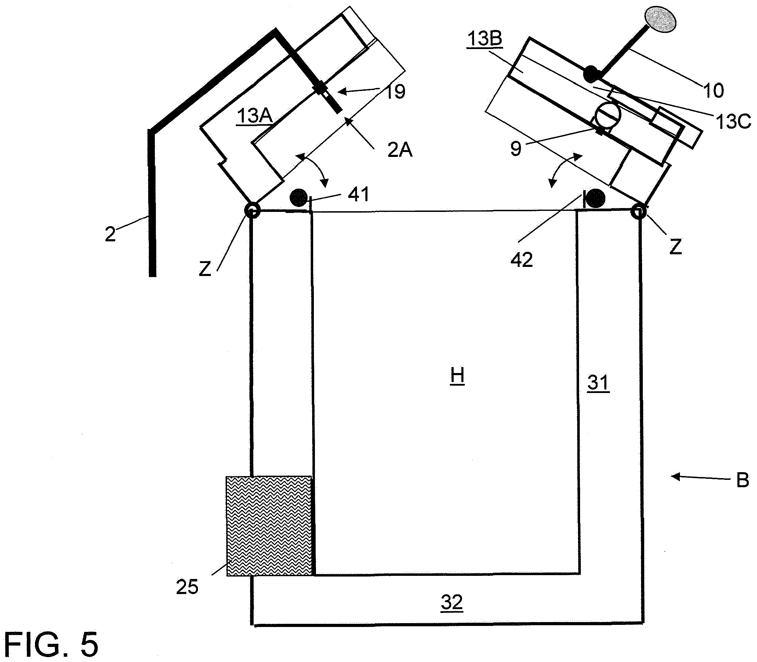

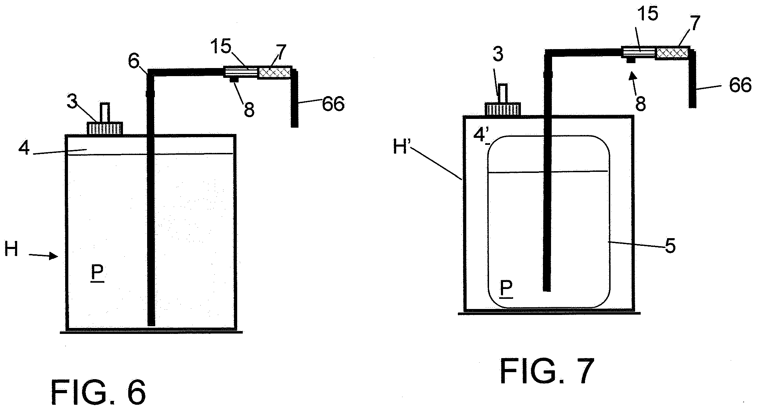

Further, the system is provided with an operating device B which is designed to cooperate with the holder H when the device B and holder H are brought from, for instance, a spatially separated storage position or transport position shown in Figs. 5, 6, to the position of mutual cooperation represented in Fig. 4.

The operating device B is provided with operating means 10 for operating the product discharge means 6 of the holder H, and with fluid supply means 1, 2 for supplying the fluid to the holder H (and microfiltration device).

The operating means 10 can be designed in different manners. In the exemplary embodiment, the operating means 10 of the operating device B comprise, for instance, a pivotable operating handle. The operating means 10 can be designed to cooperate with the hose 6, in particular for squeezing tight a part of the hose 6 and for shutting off the fluid supply 9 in a first position (not represented) and releasing it in the second position shown in Fig. 4, for stopping and allowing the passage of product P, respectively (i.e., for the purpose of regulating product dispensing). In this manner, a part of the hose 6 serves as valve means, or valve, which can be operated by the operating means 10 (with the system in assembled position).

Alternatively, the device B may comprise, for instance, automated operating means (for instance, with a dosing control, an actuator or motor, and/or provided with, for instance, a user interface, for instance, with an operating button for switching the system on and off) for regulating product discharge via the hose 6 and fluid supply to the microfiltration device.

Further, the product discharge means 6 can be provided, for instance, with valve means or shutoff means (not represented) for shutting off a respective product discharge channel during transport and/or storage of the holder H (when the holder H is not in the device B).

The fluid supply means 1, 2 can be designed in different manners and comprise, for instance, a fluid reservoir (for instance, a gas container) which is integrated with the device B or is connectable thereto for supplying the fluid via the device B to the holder H. A fluid reservoir (not represented) can, for instance, contain a fluid brought to a superatmospheric pressure suitable for use, be refillable or not, and/or be provided with fluid pump means for supply and/or discharge of fluid, or be designed differently, which will be clear to the skilled person.

In the exemplary embodiment, the fluid supply means comprise a compressor 1 (provided with a respective drive M) and a supply line 2.

In the following, air is discussed as the fluid to be supplied, however, according to an alternative embodiment, the fluid can comprise, for instance, a gas, gas mixture, nitrogen, or in certain cases also a liquid.

The present compressor 1 is designed to supply ambient air to the line 2, and keep it at a substantially constant superatmospheric pressure. Drawing-in of ambient air, by compressor 1, is indicated in Fig. 4 with arrow A. The superatmospheric pressure is, for instance, higher than approximately 2 bar, preferably higher than approximately 5 bar. According to a further elaboration, that pressure is higher than 7 or 8 bar, for instance, a pressure in the range of approximately 8-15 bar.

The compressor 1 can be provided with, or connected to, for instance, a pressure regulator, for keeping air pressure downstream of the compressor 1 (for instance, in the line 2 and/or in a space 12A surrounded by device B) at the desired value.

The present holder H is provided with a fluid entrance 3, for instance, a valve 3, for supplying (in this case) air to an inner space 4 surrounded by the holder for adjusting this space 4 to a desired pressure. The air supply means 1, 2 of the operating device B are designed to cooperate with the fluid entrance of the holder H for the supply of air (this supply is indicated in Fig. 4 with arrow F1). Optionally, the entrance 3 is provided with a sterile filter.

The operating device B may be provided, for instance, with a cavity 12 sealable by a cover 13, in which the holder H is removably placeable. Preferably, the cavity 12 is hermetically sealable from the environment by means of the cover 13, for forming a pressure chamber from the cavity 12. Provided for this purpose are, in particular, sealing means 41, 42 (for instance, a resilient sealing ring 41 and a respective sealing flange 42), which can hermetically (i.e., gas-tightly) seal off a gap between the cover 13 and a sidewall 31 of the device B.

Optionally, the device B is provided with a pressure release valve (not represented) for rendering a pressurized pressure chamber pressureless. It will be clear to the skilled person how such a pressure release valve can be designed.

The cover may be pivotably (for instance, about a pivot Z) or otherwise moveably or detachably couplable to a remaining part (e.g., the sidewall 31) of the operating device B. Schematically represented locking means 55 can be provided for locking the cover 13 in its closed position.

Preferably, the cover 13 is provided with means 13C for engaging a part of the product discharge means 6 of the holder H and/or applying a clamping force/holding force thereto, when the holder H is arranged in the operating device B. The cover may be provided, for instance, with a slot closable by a cover segment for receiving a part of the product discharge means 6, and/or be designed in a different manner. As represented in Fig. 4, in particular a filter 15 and mixer 7 of the product discharge means 6 can be detachably provided on/in the cover 13, when the system is in the operative condition. However, such a system may also not be provided with such a filter 15 (and/or mixer 7).

The cover 13 as such can comprise, for instance, a composite cover and consist of, for instance, at least two cover parts 13A, 13B which are separable from each other, for the purpose of uncoupling the product discharge means 6. In that case, the two cover parts 13A, 13B are preferably hermetically interconnectable for gas-tightly sealing off the cavity 12 from the environment, in the closed position shown in Fig. 4. Fig. 5 shows, by way of example, two cover parts 13A, 13B capable of pivoting apart.

The present cover 13 is provided with a downstream part 2A of the air supply means mentioned. The present holder H is designed to cooperate with that downstream part 2A of the air supply means, in the holder position placed in the cavity and with a closed cover (see Fig. 4), to receive air.

In the present embodiment, the air supply means 1, 2 are advantageously further arranged for supplying the air supplied by the compressor 1 to an environment of the holder H present in the device B, in particular to a space 12A (see Fig. 4) enclosed between the holder H and operating device B, with the holder H and operating device B in the cooperating position. To this end, the downstream part 2A of the supply line 2 is provided, for instance, with an air outlet 19 (which may or may not comprise a valve or valve means; outflow of air from this outlet 19 is indicated in Fig. 4 with arrow F2).

The configuration of the valve 3 and outlet 19 can, for instance, be such that air pressures in the holder inner space 4 and the space 12A enclosed between holder H and operating system B are substantially equal, or, conversely, differ from each other.

With the holder H shown in Figs. 4, 5, the product P is in the inner space 4, so that air supplied via the valve 3 to the inner space 4 comes into contact with the product P in this space 4.

Fig. 7 shows an alternative embodiment, where the inner space 4' of the holder H' is provided with a space surrounded by an outer wall, which space is provided with a flexible bag 5 filled with the product. It is thus avoided that air in the holder H' supplied via valve 3 to the inner space 4' can come into contact with the product P present in the bag 5. This is especially advantageous when the storage life of the product P is limited under the influence of contact with air. In this case too, the product P, located in the bag 5, may be provided, for instance, with a propellant and/or blowing agent (for instance, nitrous oxide, or the like), for instance, at a pressure of at least 2 bar (absolute) and, for instance, at most 8 bar. According to a further elaboration the pressure mentioned is higher than 1 bar, and, for instance, lower than 2 bar, for instance, a pressure in the range of 1.01-1.9 bar, in particular 1.5-1.9 bar.

Preferably, the product discharge means 6 (of the holder H) are designed for introducing gas bubbles into the product P, in particular for forming a homogeneous foam (monodisperse or otherwise). Monodisperse foam is a foam where the bubbles present in the foam have substantially the same dimensions. The present product discharge means 6 are provided with a gas inlet 8 which, in the position of cooperation, is connected to a gas supply 9 of the operating device B, for supplying air coming from the gas supply 9 to the product P. Supply of air to the operating means 6 (via supply 9 and inlet 8) is indicated in Fig. 4 with arrow F3. In the exemplary embodiment, this supply 9 is located in a part of the cover 13, and upstream is in fluid communication with the cavity 12A for receiving air therefrom. Alternatively, the supply 9 may be connected, for instance, via a separate air line to the compressor 1. Further, the present supply 9 is provided with an optional valve means 9 which is in an open position during product dispensing (see Fig. 4) and, for instance, can be brought to a closed position (shown in Fig. 5). Optionally, valve means 9 of the gas supply 9 may be coupled to the operating means 10, to be operated under the influence of the operating means 10.

As mentioned, the product discharge means 6 of the holder H may be provided with a static mixing device 7 for agitating the product during discharge (see also Figs. 1, 3). Further, it is advantageous when the product discharge means 6 are provided with a filtration device 15 (see Figs. 1, 2) which is connectable to the fluid supply 9 to supply air to product P flowing through the device 15 (i.e., to disperse air into the product flow). Good results are obtained when the static mixing device 7 is disposed downstream of the filtration device 15. The mixer 7 and the filtration device 15 may comprise, for instance, an integral (undetachable) part of the product discharge means 6, and can, for instance, both be manufactured from disposable and/or dishwasher proof material. Alternatively, the mixer 7 and the filtration unit 15 are uncouplable from the hose 6.

The filtration unit 15 and mixer 7 can be designed, for instance, as described on the basis of the first exemplary embodiment, shown in Figs. 1-3.

During use, the static mixer 7 arranged downstream can provide a further (firming) treatment of the foam formed by means of the filtration device 15, so that a particularly homogeneous, stable, firm and uniform foam is obtained, which, during use, is dispensed by a downstream part 66 (for instance, outflow line 66) of the discharge means 6 (according to arrow Q4 in Fig. 4). The static mixer 7 as such can furthermore be designed for providing a pressure drop (of, for instance, more than 1 bar, in particular more than 2 bar), such that the pressure of the product P at the entrance 7i of the mixer 7 is relatively high (for instance, substantially equal to a pressure prevailing in the filter flow-through space 15b), while the pressure in the exit of the static mixer 7u is relatively low (for instance, substantially atmospheric). In particular, during use, the product P is pressed through the mixer 7, under the influence of an upstream thrust (created under the influence of the compressor 1; being an air pressure generated in holder space 4).

In an alternative embodiment, the system shown in Figs. 4-7 is not provided with a filtration device 15. In that case, the static mixer 7 as such can be provided, for instance, with air supply means for supplying air to product P flowing through the mixer 7.

According to a further elaboration, downstream of the microfiltration device 15, a pressure reducing device can be provided, for instance, an outflow line 66, in which the pressure of the product is slowly reduced in the flow direction (when using an outflow line, for instance, by having the diameter of the line increase gradually). This prevents damage of the foamed product. The pressure reducing device can comprise, for instance, a restriction of the discharge hose 6, for instance, a restriction provided in the hose as such, or a hose restriction effected by a clamping force of the operating device.

Use of the pressure reducing device is advantageous, for instance, if no mixing device disposed downstream of the microfiltration device is used (such a configuration is not represented as such). In that case, the pressure reducing device can be disposed, for instance, directly downstream of the microfiltration device 15.

The pressure reducing device 66 can be designed, for instance, to have the pressure of the product decrease gradually, in particular without thereby applying an agitation and/or mixing treatment to the product.

Preferably, the operating device B is designed to cool the holder H and a substantial part of the product discharge means in the cooperating position mentioned, preferably such that the temperature of the product in the holder H is lower than 10 °C, in particular lower than 5° C, and that of the product discharged during use is higher than 0 °C. Alternatively, the product discharged during use can have a temperature of 0 °C or lower, for instance, a temperature in the range of -20 °C-0 °C. To this end, the exemplary embodiment is provided with a (schematically represented) cooling system 25. The cooling system 25 can be designed, for instance, to withdraw heat from the cavity 12 and/or holder H enclosed by device B and to dissipate it to an environment, and may be provided, for instance, with a refrigerant circuit known per se, heat emitting fins (with or without external air convection), heat transferring means (for instance, with Peltier elements), and the like. Dissipation of heat is indicated in Fig. 4 with arrow W.

As will be discussed in the following, the product to be dispensed may be hot. To this end, the product, before being placed in the holder, may already be heated up with means known for that purpose (for instance, microwave, steam, electric, convection, or other means). Also, for instance, heating means may be used, to heat product to be dispensed. Such heating means may, for instance, be part of the operating device B, and be set up at various locations (at various parts), for instance, near product holder H, upstream at product discharge means 6, at or near a downstream part 66, filtration unit 15, mixer 7, and/or elsewhere. The heating means can, for instance, heat a product cooled by the optional cooling system 25.

Preferably, the operating device B is designed to thermally insulate a product holder H disposed in the device B from an environment. To this end, the device B may be provided, for instance, with a relatively thick, thermally insulating cover 13, sidewall 31, and bottom 32. To this end, cover 13, sidewall 31 and bottom 32 may each, for instance, be provided with suitable insulating material, or afford thermal insulation in a different manner, which will be clear to the skilled person.

Fig. 4 shows a use of the system, comprising a method for dispensing the product P. In Fig. 4 a holder H not provided with an inner bag is arranged in the operating device B. Alternatively, for instance, a holder H' according to the example shown in Fig. 7 can be utilized.

For the purpose of use, the holder H filled (at least partly) with product P can be brought into the position of cooperation with the operating device B, in the cavity 12, while the cavity 12 is hermetically sealed off from an environment by the cover 13. The placement of the holder H is, in particular, such that the dosing handle 10 can cooperate with the hose 6 for dosing the dispensing of product. Furthermore, via closure of the cover 13 (or cover parts 13A, 13B) valve 3 of the holder can be brought into contact with the compressor 1, via the supply line 2. After pulling the dosing handle, foamed product flows from the apparatus.

Under the influence of the spraying-out of product P, the compressor 1 can, for instance, switch on for drawing in air, preferably via a filter (not represented), and pumping it into the holder H (or, for instance, into the space 4 between the bag 5 and holder wall, in case the holder shown in Fig. 7 is used). The compressor 1 can supply air, for instance, such that the pressure in the holder inner space 4 is equal to a particular (for instance, superatmospheric) initial pressure in the holder 4, in particular independently of an amount of product P (still) present in the holder. This is done, for instance, at such a speed that the pressure in the holder H remains in accordance with a desired product quality (and is, for instance, never more than 0.5 bar lower than an initial pressure in the holder H). In this manner, product P of very constant quality can be dispensed by the system.

The compressor 1 may, for instance, be automatically activatable for supplying air to the holder H, via the line 2 and the valve 3, for holding the pressure in the holder H at a desired (preferably substantially constant) value. In Fig. 4, the operating handle 10 has been brought from a first operating condition to a second operating condition, for releasing the discharge hose 6 of the holder H for discharging product P via the hose.

During use, the present operating device B also brings the air inlet 8 of the microfiltration filter 15 of the product discharge means 6 (of the holder H) to a particular pressure (in this case via the air outlet 19 and gas supply 9) for introducing gas bubbles into the product via the filter 15.

The use of the system in this case comprises further a method for dispensing homogeneously foamed product. As mentioned, air is supplied via the microfiltration wall 15a to the product P, in particular for forming a foamed and/or aerated product. Thereupon, the product P provided with air bubbles undergoes a mixing treatment, under the influence of the static mixing device 7, while the mixing device can also gradually reduce an excess pressure of the product as the product flows through the mixing device 7.

In an advantageous manner, the static mixer 7 can effect a stable product being obtained. In the case where the product P is or comprises cream, use can be made of a cream in which the fat exhibits a tendency towards partial coalescence. During dosing of cream, partial coalescence will take place in the static mixer 7, which leads to a more stable cream. It is preferred to keep the holder H in the cavity 12 at a constant temperature, so that the risk of partial coalescence before spraying-out is strongly reduced.

As follows from the above, during use, preferably air is added to the product P, via the product discharge 6. In the case where the product P is or comprises cream, this embodiment also leads to a more stable cream because of the (partial) use of nitrogen for foaming the cream. In this embodiment, no or relatively little propellant/blowing agent (e.g., nitrous oxide) already dissolved in the product will be required. In that case, the pressure in the holder H, before the holder is coupled to the operating device B, can be, for instance, a substantially atmospheric pressure.

When the holder H is, for instance, empty, the holder H is taken from the operating device B, and may, for instance, be discarded or recycled. Then, a new (full) holder H can be brought into a position of cooperation with the operating device B, for the purpose of continuing dispensing of the product.

In the above embodiments of the second exemplary embodiment, there is preferably no contact between the product P and the dosing system 10 (of the operating device B). After exiting the holder H, the product P preferably comes into contact only with the flexible hose 6, the flow-through channel of the filter 15 and the static mixer 7. This renders the system highly user friendly because the dosing system, for instance, cannot be contaminated with product.

Third exemplary embodiment

Fig. 8 shows an alternative embodiment, which differs from the configuration shown in Fig. 4 in that the system is provided with a pump 550 (instead of fluid supply means) for pumping product from the holder, and discharging it via the product discharge means 6. The pump 550 may, for instance, be part of a cover as mentioned, of the product discharge means 6, or of another part of the system. In this case, the cavity in which the holder H is receivable is, for instance, not a pressure chamber. As shown in Fig. 8, supply line 2 may, for instance, be connectable, bypassing the cavity, to the product discharge means 6 (for instance, to a microfiltration device 15 thereof). The pump 550 can be designed in different manners, which will be clear to the skilled person, and comprise, for instance, a hand pump, or a motor driven product pump (the motor being, e.g., an electric motor), and preferably a peristaltic-type pump. In this case, the holder H can be provided with a valve 3 for supplying air (or a different gas or gas mixture) to the holder inner space during discharge of product from the holder H. The device (for instance, the cover 13 as in Fig. 8, or the sidewall 31) may be provided with one or more passages 551 for supplying air from an environment to the holder H (in particular, the valve 3 thereof). Such an aeration channel 551 can extend, for instance, along a boundary between two cover parts 13A, 13B, in particular if the cover 13 comprises different cover segments.

The operation of the example shown in Fig. 8 differs from the operation of the system according to Fig. 4 in that the pump 550 during use pumps the product from the holder H and discharges it via the discharge 6 (in particular through the microfiltration device 15 and processer 7). Air can be supplied by the compressor via the line 2 directly to the microfiltration device 15, to be injected into product flowing through this device, in particular for the purpose of foam formation.

Fourth exemplary embodiment

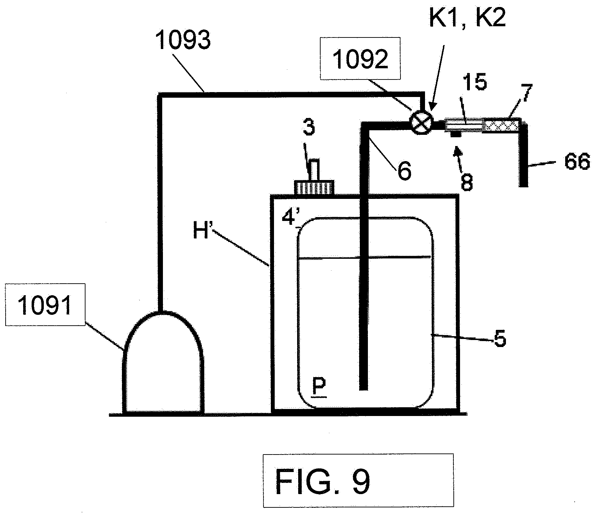

Fig. 9 shows a further embodiment of a system according to the invention. This embodiment comprises, for instance, administering (hot) steam to the product discharge means 6, for instance, via operable valve means 1092.

This embodiment differs in particular from the system shown in Fig. 8 in that an operable valve device 1092 is placed upstream of the mixing and/or microfiltration device. The valve device is preferably an integral part of the product discharge means 6.

The valve device 1092 comprises, for instance, two valves K1 and K2, and has, for instance, three positions, viz., a first position, a second position and a third position. The valve device 1092 can also be designed in a different manner. A first valve K1 of the valve device 1092 regulates, for instance, through-flow of product from the holder H' to the microfiltration device. A second valve K2 of the valve device 1092 regulates, for instance, a supply of different matter, in particular a heated medium, to the product discharge means 6 (for instance, simultaneously with flow of product through the product discharge means 6, or, conversely, when no product flows through the product discharge means 6).

The system may be provided with a heated medium provider 1091, for instance, a steam generator 1091, hot water provider, a flow-through heating device, or the like, which is preferably connectable by a respective exit to an entrance of the valve device 1092 (for instance, as in the drawing, via a suitable supply line 1093). The heated medium provider 1091 can be part of an above-mentioned operating device B, or comprise a separate device 1091. The heated medium provider 1091 is, for instance, a heating device, for heating the product, via a medium heated by that device 1091.

The above-mentioned first position of the valve device 1092 comprises, for instance, the mere passing of product P to be foamed (coming from the holder H'), with the product being foamed cold. Here, only valve K1 of the valve device is open, and valve K2 is closed (at least, the first valve K1 is then in a position to allow product to pass, and the second valve K2 is in a position to close the entrance to the line 1093).

The above-mentioned second position of the valve device 1092 comprises, for instance, adding a heated medium, preferably a heated gas or gas mixture, in particular hot steam, to the product, so that the product is foamed in heated condition. To this end, both valves K1 and K2 are open (at least, the first valve K1 is then in a position to allow product to pass, and the second valve K2 is in a position to allow medium coming from the line 1093 to pass to the product discharge means 6).

The above-mentioned third position of the valve device 1092 comprises, for instance, the mere passing of a heated medium (for instance, steam) delivered by provider 1091, in particular for cleaning the mixing and/or microfiltration device. In the third position, only valve K2 is open and the valve K1 is closed (at least, the first valve K1 is then in a closed position to block flow of product, and the second valve K2 is in a position to allow medium coming from the line 1093 to pass to the product discharge means 6).

The configuration shown in Fig. 9 can be used, for instance, in combination with one or more of the exemplary embodiments shown in Figs. 1-8, or independently thereof.

It is self-evident that the invention is not limited to the above-described exemplary embodiments. Various modifications are possible within the framework of the invention as set forth in the appended claims.

Thus, the product P can comprise, for instance, an edible or non-edible protein, a protein mixture or protein solution. An edible protein solution can comprise, for instance, a milk protein, a whey protein and casein, egg white proteins, yeast isolate, soy protein, hemoglobin, vegetal protein isolate, meat protein, collagen, gelatin and the like.

The product may be, for instance, homogeneously or non-homogeneously foamed.

The product can be a food product, or a cosmetic product, a cleaner and/or a different type of product.

The product can further contain various substances, for instance, a thickener, coloring, flavoring and the like.

Furthermore, the product is, in particular, a food, for instance, milk, cream, cappuccino milk, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream, dessert or the like. The product can further comprise, for instance, vegetal or animal fat or oil, a thickener, sugar, sweeteners, flavoring, coloring and/or the like, and/or various other ingredients, which will be clear to the skilled person. The product can also comprise, for instance, a non-consumable product, a body care product, a hair treating agent, or the like.

Further, the dispensed product can be, for instance, a hot product. To this end, the product, before being placed in the holder, may already be heated with means known for that purpose (e.g., microwave, steam, electric, convection, or other means). Also, the method and the system according to the invention may utilize or be provided with, for instance, heating means (for instance, a heating system), to heat the product.

According to a further elaboration, heating of the product is carried out upstream with respect to the microfiltration device, for instance, by supplying heat to and/or into the product holder H, and/or by heating product at a location between the product holder and the microfiltration device. This heating may be, for instance, between 20 °C and 90 °C, preferably between 40 °C and 75 °C. Furthermore, product heating may be carried out downstream with respect to the microfiltration device, for instance, in and/or upstream with respect to an outflow line 66. The heating means can be designed, for instance, to heat product flowing through the product discharge means 6, and/or to heat gas to be supplied to the product, and/or to heat an optional mixing device and/or a microfiltration device, and the like. According to a further elaboration, the heating means may be designed, for instance, to bring the microfiltration device to a temperature that is suitable for heating (i.e., increasing the temperature) of the product flowing past. According to a further elaboration, the heating means may be designed to bring a processing device 7 to a temperature that is suitable for heating the product flowing past.

In addition, the method (and the system) can utilize at least two product flows (two product parts), where a first product part is foamed by a present method (and the system, respectively) and then combined (by the method and the system, respectively) with a second, non-foamed product part (and, for instance, is mixed therewith). The product discharge means 6 may be provided with a branch, to provide, from this branch, a first product flow and a second product flow separate therefrom. The first product flow is then foamed, and thereupon combined again with the second product flow (and, for instance, mixed therewith). In product heating, there may be heated, for instance, a first product stream as mentioned, or, conversely, a second product stream as mentioned, or both.

Further, preferably static means are utilized, for instance, a static microfiltration filter and an optionally static membrane. In an alternative embodiment, for instance, a moving filter (and/or optionally dynamic membrane) can be utilized.

The present invention (system) may be used to provide various products, for instance, milk, cream, cappuccino milk, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream, dessert, or other products.

The invention can prepare hot pourable foams, for instance, cappuccino, latte macchiato, chocolate drinks, and other hot (milk) drinks, with or without flavor additions. In addition, non-dairy drinks can be prepared, or products that are intended for consumption. In a further elaboration, to that end, the product is foamed to a minimum overrun of 10%, and obtains/has immediately after dispensing a temperature between 20 and 90 °C, preferably between 40 and 70 °C. The product may be, for instance, predominantly pourable (for instance, with an overrun lower than 100%). The heating means mentioned can be used to dispense warm pourable product. The pourable product may be obtained, for instance, by combining a non-foamed product part and a foamed product part.

Alternatively, the invention can prepare cold and ice-cold drinks, for instance, milk drink, milk shake, chocolate drink, lunch drink, yoghurt drink, fruit drink, alcohol-containing drink such as beer or wine, etc. In that case, the product can have, for instance, a minimum overrun of 10%, and a temperature lower than 20 °C, preferably a temperature between -5 and 10 °C. The cold, dispensed product may be predominantly pourable, and can comprise a sweet or, conversely, a salty product, a fermented milk product, juice, or other product.

Furthermore, the invention can be used to provide hot and cold foamed sauces, for instance, a sweet sauce, sour sauce, salty sauce and/or other sauce. Such a sauce obtained by means of the invention can have a minimum overrun of 1%, and a temperature in the range of from -20 °C to 80 °C.

A dessert prepared by means of the invention, for instance, a mousse, vla or yoghurt, can have a minimum overrun of 10%, and, for instance, a temperature of 1 °C to 40 ° C (preferably a temperature lower than 10 °C). Spray cream is a specific use where cream is realized that has a higher overrun (preferably higher than 300%) and improved stability over conventional products.

The invention is particularly well-suited to prepare ice cream or a (milk) shake. The ice cream or (milk) shake product can have an overrun in the range of 10%-200%, and a temperature of 0 °C or lower (preferably a temperature in the range of -10 °C to -2 °C).

The invention (system) can be used, for instance, such that a product mentioned undergoes an overrun that is greater than 100% (in particular approximately 150% or more, and more particularly approximately 200% or more), utilizing a relatively low pressure (in particular a pressure of gas supplied to a gas supply space mentioned), for instance, a pressure lower than 2 bar. The invention (method, system, or both) can be used, for instance, such that a product mentioned undergoes an overrun that is greater than 100% (in particular approximately 150% or more, and more particularly approximately 200% or more), while the dispensed product has a relatively low temperature, for instance, a temperature of approximately 0 °C or lower.

Furthermore, the invention (system) may be so configured that the product P downstream of the microfiltration device does not undergo any mixing treatment, and does not undergo any controlled pressure reduction. The above-described Examples 1a, 1b comprise such a method, where the product semi-skimmed milk was used. Also other products can be treated according to a method (and/or by a system) so configured that the product P downstream of the microfiltration device does not undergo any mixing treatment, and does not undergo any controlled pressure reduction, for instance, a food product, cream, cappuccino milk, spray cream, (fruit) juice/drink, an alcohol-containing drink or drink base, for instance, beer or wine, a dairy or dairy-based drink, for instance, a whey drink or permeate-based drink, (milk) shake, chocolate drink, (drinking) yoghurt, sauce, ice cream or dessert, in particular a dairy product, or a product not intended for consumption.

A further elaboration of the invention comprises, for instance, a system that is not provided with a processing device downstream with respect to the microfiltration device 15 (so that the system performs no mixing treatment and no pressure reduction treatment on the product provided with gas).

**Claims**

1. A product dispensing system for dispensing a foamed food product provided with a holder (H) which contains a product (P) to be dispensed, and product discharge means (6) for discharging product coming from the holder (H), wherein the product discharge means (6) are provided with a microfiltration device (15) which is provided with a product entrance for supply of product (P), wherein the microfiltration device (15) is connectable to a fluid supply for supplying gas to the product during product discharge, wherein the microfiltration device (15) is provided with a microfiltration wall (15a) having gas transmissive pores, for instance, a tubular wall, which separates a gas supply space (15d) associated with the fluid supply from a product feed-through channel (15b) associated with the product entrance,
   wherein a distance between the product holder (H) and the microfiltration device (15) is less than 20 cm, for instance a distance less than 5 cm.

2. A system according to claim 1, wherein the system includes a gas cylinder to effect the gas supply to the microfiltration device.

3. A system according to any of the preceding claims, wherein the microfiltration device (15) has a cylindrical microfiltration wall, wherein a length of the wall (15a), in particular of the product feed-through channel (15b), is at most 50 cm, in particular at most 20 cm, more particularly at most about 10 cm.

4. A system according to any of the preceding claims, wherein the system is provided with a static mixing device (7) that is disposed downstream of the microfiltration device, wherein the static mixing device (7) comprises a helical mixer.

5. A system according to any of the preceding claims, wherein the microfiltration device (15) and a downstream static mixing device (7) are integrated with the product discharge means of the holder (H).

6. A system according to any of the preceding claims, including gas supply means are designed to supply a first gas to the holder (H) and a second gas, different from the first gas, to the microfiltration device (15).

7. A system according to any of the preceding claims, wherein said fluid is nitrogen or air.

8. A system according to any of the preceding claims, wherein during operation the gas is brought via the microfiltration device (15) into the product under the influence of an absolute pressure of more than 2 bar, for instance, a pressure in the range of more than 5 bar, in particular a pressure higher than 7 bar, for instance, a pressure in the range of about 8 - 15 bar.

9. A system according to any of the preceding claims, wherein the microfiltration device is provided with a filtration wall (15a) with gas transmissive pores having a pore size in the range of 0.1-10 microns, in particular a pore size of at least 0.1 micron and less than 2 microns, more particularly a pore size of at least 0.2 micron and less than 1.5 microns.

10. A system according to any of the preceding claims, wherein a length of the product feed-through channel (15b) measured in a product flow direction is at most 5 cm, and more particularly is in the range of approximately 0.5-5 cm, for instance, approximately 0.5, 1, 2, 3 or 4 cm.

11. A system according to any one of the preceding claims, provided with an operating device (B) which is designed to cooperate with the holder (H) when the operating device (B) and holder (H) are brought in a position of mutual cooperation.

12. A system according to claim 11, wherein the operating device (B) is provided with operating means (10) for operating said product discharge means (6), and with fluid supply means (1, 2) for supplying said fluid to the holder (H).

13. A system according to any one of claims 11 - 12, wherein the operating device (B) includes a gas supply (9).

14. A system according to any of the preceding claims, wherein the holder (H) includes a flexible bag (5) filled with the food product.

15. A system according to any of the preceding claims, wherein fluid supply means (1, 2) are integrated with the operating device (B).

**Patentansprüche**

1. Produktabgabesystem zum Abgeben eines geschäumten Nahrungsmittelprodukts, das mit einem Halter (H), der ein abzugebendes Produkt (P) enthält, und Produktabgabemitteln (6) zum Abgeben von Produkt, das aus dem Halter (H) kommt, versehen ist, wobei die Produktabgabemittel (6) mit einer Mikrofiltrationsvorrichtung (15) versehen sind, die mit einem Produkteinlass für die Zufuhr von Produkt (P) versehen ist, wobei die Mikrofiltrationsvorrichtung (15) mit einer Fluidzufuhr zum Zuführen von Gas zu dem Produkt während der Produktabgabe verbunden werden kann, wobei die Mikrofiltrationsvorrichtung (15) mit einer Mikrofiltrationswand (15a) versehen ist, die gasdurchlässige Poren aufweist, beispielsweise eine röhrenförmige Wand, die einen Gaszufuhrraum (15d), der der Fluidzufuhr zugeordnet ist, von einem Produktdurchführungskanal (15b) trennt, der dem Produkteinlass zugeordnet ist, wobei ein Abstand zwischen dem Produkthalter (H) und der Mikrofiltrationsvorrichtung (15) weniger als 20 cm, beispielsweise weniger als 5 cm, beträgt.

2. System nach Anspruch 1, wobei das System einen Gaszylinder einschließt, um die Gaszufuhr zur Mikrofiltrationsvorrichtung zu bewirken.

3. System nach einem der vorhergehenden Ansprüche, wobei die Mikrofiltrationsvorrichtung (15) eine zylindrische Mikrofiltrationswand aufweist, wobei eine Länge der Wand (15a), insbesondere des Produktdurchführungskanals (15b), höchstens 50 cm, insbesondere höchstens 20 cm, insbesondere höchstens etwa 10 cm beträgt.

4. System nach einem der vorhergehenden Ansprüche, wobei das System mit einer statischen Mischvorrichtung (7) versehen ist, die stromabwärts der Mikrofiltrationsvorrichtung angeordnet ist, wobei die statische Mischvorrichtung (7) einen Wendelmischer umfasst.

5. System nach einem der vorhergehenden Ansprüche, wobei die Mikrofiltrationsvorrichtung (15) und eine stromabwärts gelegene statische Mischvorrichtung (7) in die Produktabgabemittel des Halters (H) integriert sind.

6. System nach einem der vorhergehenden Ansprüche, das Gaszufuhrmittel einschließt, die so ausgelegt sind, dass sie ein erstes Gas dem Halter (H) und ein zweites Gas, das sich vom ersten Gas unterscheidet, der Mikrofiltrationsvorrichtung (15) zuführen.

7. System nach einem der vorhergehenden Ansprüche, wobei das Fluid Stickstoff oder Luft ist.

8. System nach einem der vorhergehenden Ansprüche, wobei während des Betriebs das Gas über die Mikrofiltrationsvorrichtung (15) unter dem Einfluss eines absoluten Drucks von mehr als 2 bar, beispielsweise eines Drucks im Bereich von mehr als 5 bar, insbesondere eines Drucks von mehr als 7 bar, beispielsweise eines Drucks im Bereich von etwa 8-15 bar, in das Produkt eingebracht wird.

9. System nach einem der vorhergehenden Ansprüche, wobei die Mikrofiltrationsvorrichtung mit einer Filterwand (15a) mit gasdurchlässigen Poren versehen ist, die eine Porengröße im Bereich von 0,1-10 Mikron, insbesondere eine Porengröße von wenigstens 0,1 Mikron und weniger als 2 Mikron, insbesondere eine Porengröße von wenigstens 0,2 Mikron und weniger als 1,5 Mikron aufweisen.

10. System nach einem der vorhergehenden Ansprüche, wobei eine Länge des Produktdurchführungskanals (15b), gemessen in einer Produktflussrichtung, höchstens 5 cm beträgt und insbesondere im Bereich von etwa 0,5-5 cm liegt, beispielsweise etwa 0,5, 1, 2, 3 oder 4 cm.

11. System nach einem der vorhergehenden Ansprüche, das mit einer Betätigungsvorrichtung (B) versehen ist, die so ausgelegt ist, dass sie mit dem Halter (H) zusammenwirkt, wenn die Betätigungsvorrichtung (B) und der Halter (H) in eine Position der gegenseitigen Zusammenwirkung gebracht werden.

12. System nach Anspruch 11, wobei die Betätigungsvorrichtung (B) mit Betätigungsmitteln (10) zum Betätigen der Produktabgabemittel (6), und mit Fluidzufuhrmitteln (1, 2) zum Zuführen des Fluids dem Halter (H) versehen ist.

13. System nach einem der Ansprüche 11-12, wobei die Betätigungsvorrichtung (B) eine Gaszufuhr (9) einschließt.

14. System nach einem der vorhergehenden Ansprüche, wobei der Halter (H) einen flexiblen Beutel (5) einschließt, der mit dem Nahrungsmittelprodukts gefüllt ist.

15. System nach einem der vorhergehenden Ansprüche, wobei Fluidzufuhrmittel (1, 2) in die Betätigungsvorrichtung (B) integriert sind.

## Revendications

1. Système de distribution de produit destiné à distribuer un produit alimentaire mousseux doté d'un support (H) qui contient un produit (P) à distribuer, et de moyens de libération du produit (6) destinés à libérer le produit en provenance du support (H), dans lequel les moyens de libération du produit (6) sont dotés d'un dispositif de microfiltration (15) qui est doté d'une entrée d'approvisionnement en produit (P), dans lequel le dispositif de microfiltration (15) peut être connecté à une alimentation en fluide destinée à fournir au produit du gaz au cours de la libération du produit, dans lequel le dispositif de microfiltration (15) est doté d'une paroi de microfiltration (15a) qui présente des pores perméables au gaz, par exemple, une paroi tubulaire, qui sépare un espace d'alimentation en gaz (15d) associé à l'alimentation en fluide, d'un canal d'amenée du produit (15b) associé à l'entrée du produit,
dans lequel la distance entre le support de produit (H) et le dispositif de microfiltration (15) est inférieure à 20 cm, par exemple une distance inférieure à 5 cm.

2. Système selon la revendication 1, dans lequel le système comprend un cylindre de gaz destiné à alimenter en gaz le dispositif de microfiltration.

3. Système selon l'une quelconque des revendications précédentes, dans lequel le dispositif de microfiltration (15) présente une paroi cylindrique de microfiltration, dans lequel une longueur de la paroi (15a), en particulier du canal d'amenée du produit (15b), est au maximum égale à 50 cm, en particulier au maximum 20 cm, plus particulièrement au maximum 10 cm environ.

4. Système selon l'une quelconque des revendications précédentes, dans lequel le système est doté d'un dispositif de mélange statique (7) qui est disposé en aval du dispositif de microfiltration, dans lequel le dispositif de mélange statique (7) comprend un mélangeur hélicoïdal.

5. Système selon l'une quelconque des revendications précédentes, dans lequel le dispositif de microfiltration (15) et un dispositif de mélange statique en aval (7), sont intégrés aux moyens de libération du produit du support (H).

6. Système selon l'une quelconque des revendications précédentes, comprenant des moyens d'approvisionnement en gaz qui sont conçus pour fournir un premier gaz au support (H), et un second gaz, différent du premier gaz, au dispositif de microfiltration (15).

7. Système selon l'une quelconque des revendications précédentes, dans lequel ledit fluide est de l'azote ou de l'air.

8. Système selon l'une quelconque des revendications précédentes, dans lequel, en fonctionnement, le gaz est introduit, par l'intermédiaire du dispositif de microfiltration (15), dans le produit sous l'influence d'une pression absolue supérieure à 2 bars, par exemple, une pression supérieure à 5 bars, en particulier une pression supérieure à 7 bars, par exemple, une pression qui se situe dans une plage comprise entre 8 et 15 bars environ.

**9.** Système selon l'une quelconque des revendications précédentes, dans lequel le dispositif de microfiltration est doté d'une paroi de filtration (15a) avec des pores perméables au gaz qui présentent une dimension de pore qui se situe dans une plage comprise entre 0,1 et 10 micromètres, en particulier une dimension de pore au moins égale à 0,1 micromètre et inférieure à 2 micromètres, plus particulièrement une dimension de pore au moins égale à 0,2 micromètre et inférieure à 1,5 micromètres.

**10.** Système selon l'une quelconque des revendications précédentes, dans lequel une longueur du canal d'amenée du produit (15b), mesurée dans la direction du flux du produit, est au maximum égale à 5 cm, et se situe plus particulièrement dans une plage comprise approximativement entre 0,5 et 5 cm, par exemple approximativement 0,5, 1, 2, 3 ou 4 cm.

**11.** Système selon l'une quelconque des revendications précédentes, doté d'un dispositif opérationnel (B) qui est conçu pour coopérer avec le support (H) lorsque le dispositif opérationnel (B) et le support (H) sont amenés dans une position de coopération mutuelle.

**12.** Système selon la revendication 11, dans lequel le dispositif opérationnel (B) est doté de moyens opérationnels (10) destinés à faire fonctionner lesdits moyens de libération du produit (6), et de moyens d'approvisionnement en fluide (1, 2) destinés à fournir ledit fluide au support (H).

**13.** Système selon la revendications 11 ou 12, dans lequel le dispositif opérationnel (B) comprend un approvisionnement en gaz (9).

**14.** Système selon l'une quelconque des revendications précédentes, dans lequel le support (H) comprend un sac souple (5) rempli du produit alimentaire.

**15.** Système selon l'une quelconque des revendications précédentes, dans lequel des moyens d'approvisionnement en fluide (1, 2) sont intégrés au dispositif opérationnel (B).

FIG. 1

FIG. 2

FIG. 3

EP 3 533 337 B1

FIG. 4

FIG. 5

**FIG. 6**

**FIG. 7**

FIG. 8

FIG. 9

EP 3 533 337 B1

**EP 3 533 337 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1061006 A1
- NL 1024433
- NL 1024438
- DE 4126397

- US 4674888 A
- JP 2005143372 B
- WO 2008009616 A
- WO 2006078339 A